# EUROPEAN PATENT APPLICATION

(11) **EP 1 936 476 A1**
(43) Date of publication of application: **25.06.2008**
(21) Application number: 06767877.1
(22) Date of filing: 05.07.2006
(51) Int. Cl.: G06F 3/023, G06F 3/02, H03M 11/04, H04M 1/23

(54) **INPUT DEVICE AND PORTABLE TERMINAL HAVING SAME**

(30) Priority: 07.10.2005 JP 2005295626
(71) Applicant: MATSUSHITA ELECTRIC INDUSTRIAL CO., LTD., Osaka 571-8501 (JP)
(72) Inventor: TAKASAKI, Shinichi c/o Matsushita Electric Industrial Co.,Ltd.,, 2-1-61,Shiromi Chuo-ku, Osaka-shi Osaka, 540-6207 (JP); INOUE, Shigeyuki c/o Matsushita Electric Industrial Co.,Ltd.,, 2-1-61,Shiromi Chuo-ku, Osaka-shi Osaka, 540-6207 (JP); YAMAMOTO, Hiroshi c/o Matsushita Electric Industrial Co.,Ltd.,, 2-1-61,Shiromi Chuo-ku, Osaka-shi Osaka, 540-6207 (JP)
(74) Representative: Pautex Schneider, Nicole Véronique
(86) International application number: PCT/JP2006/313371
(87) International publication number: WO 2007/043222

(57) **Abstract**

To provide the input device in the present invention, which allows comfortable operation with lightened mental and physical load, has at least one input key and includes: an association storage unit storing an array of plural information in association with the input key, the plural information each having an order; a selection unit selecting, from the array, predetermined information as input information; a touch detection unit detecting that an object touches a surface of the input key; and a movement relevant information detection unit detecting movement relevant information concerning a movement of a contact point between the surface of the input key and the object, the contact point being detected by the touch detection unit. The selection unit selects, from the array, information having a predetermined order stored in association with the input key on which the touch detection unit detects the touch by the object, based on the movement relevant information.

## Description

### Technical Field

The present invention relates to input devices having at least one input key, and particularly to a technique for easily operating a mobile terminal having an input device.

### Background Art

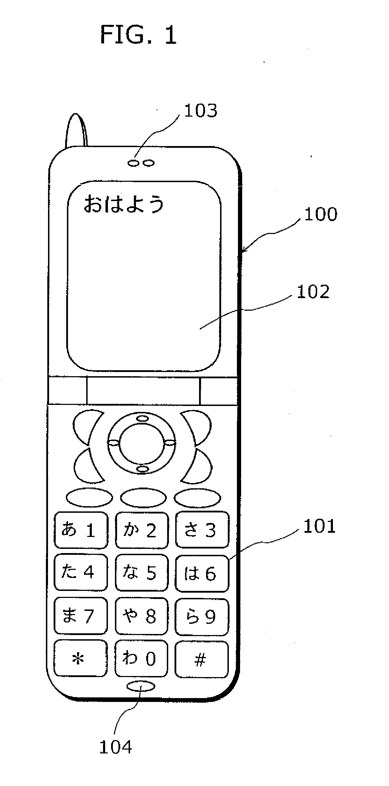

FIG. 1 is an external view of a conventional mobile terminal. As shown in FIG. 1, a conventional mobile terminal 100 includes a built-in operation unit 101 as an input device in addition to a display unit 102, a speaker 103, a microphone 104, and so on.

Furthermore, the operation unit 101 of the mobile terminal is provided with input keys, function keys, selection keys, and an enter key. The input keys are made up of twelve kinds of keys which are: ten numeric keys on which numerals 0 to 9 are respectively labeled; and two other keys on which * and # are respectively labeled. The function keys are used for calling functions, such as "clear", "memo", "manner mode", and so on. When a user operates the mobile terminal with a hand, the user typically holds the mobile terminal in one hand and operates the input keys, the function keys, the selection keys, and the enter key with the thumb of the hand holding the mobile terminal.

The conventional mobile terminal is not designed to facilitate an input operation for characters, numerals, symbols, and so on. For example, in the case inputting " 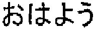 ", it is necessary to go through the following four steps: press a key labeled 1 five times to input in order corresponding to " 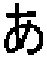 " →" 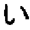 "→" 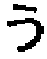 "→" 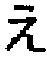 "→" 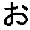 "; then press a key labeled 6 once to input " 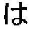 "; subsequently press a key labeled 8 three times to input in order corresponding to " 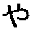 "→" 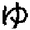 "→" 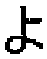 "; and lastly press the key labeled 1 three times to input in order corresponding to " 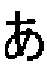 "→" 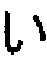 "→" 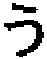 ". That is to say, it needs a key operation ten times in total to input four-character " 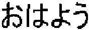 ".

Moreover, it is necessary to press the same key several times to input one character. Consequently, when it is desired to input characters speedily, there is a case of pressing the key more than the necessary number of times, such as although, for example, displaying " 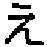 " is desired, mistaking the number of times for pressing results in displaying " 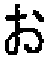 ". In this case, correcting the mistake further increases the number of times for pressing the key.

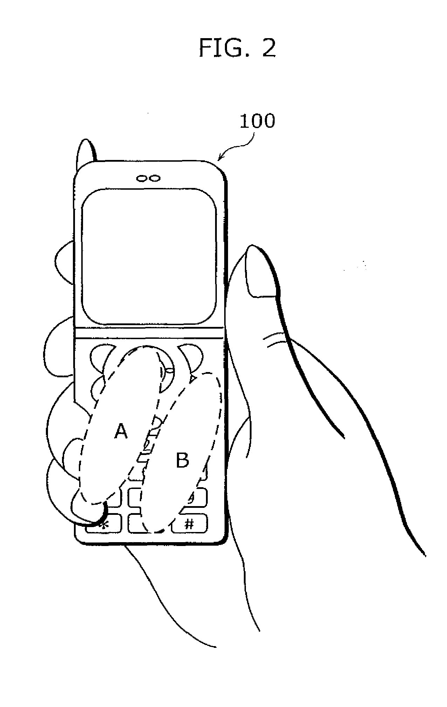

FIG. 2 is a diagram for describing a load put on a thumb of a user in operating the conventional mobile terminal. The keys provided for the conventional mobile terminal are not arranged in consideration of a region which allows for easy movement of a user's finger used for the operation. In other words, although the load put on the thumb is relatively light when operating the keys in a region A apart from the base of the thumb, a heavy load is put on the thumb when operating the keys in a region B close to the base of the thumb. As a result, the more the number of key operations is, the heavier the load is put on the hand and the finger used for operation, which can cause mental and physical fatigue. In addition, in the case where the fatigue has built up on the hand and the finger used for operation, the mobile terminal may be dropped and damaged when changing a hold on the mobile terminal.

This problem has remarkably arisen as the number of key operations has been increased along with multi-functionality of the mobile terminal in recent years. Especially in terms of character input operations such as e-mail creation, an increase in the number of characters allowed in an e-mail transmission has resulted in a significant increase in the number of key operations. For this reason, it is highly possible to cause the mental and physical fatigue, and thus this problem should be solved as soon as possible.

Accordingly, a technique that lightens, by decreasing the number of key operations, the load put on the user in operating the mobile terminal has been proposed (for example, refer to Patent References 1 and 2).

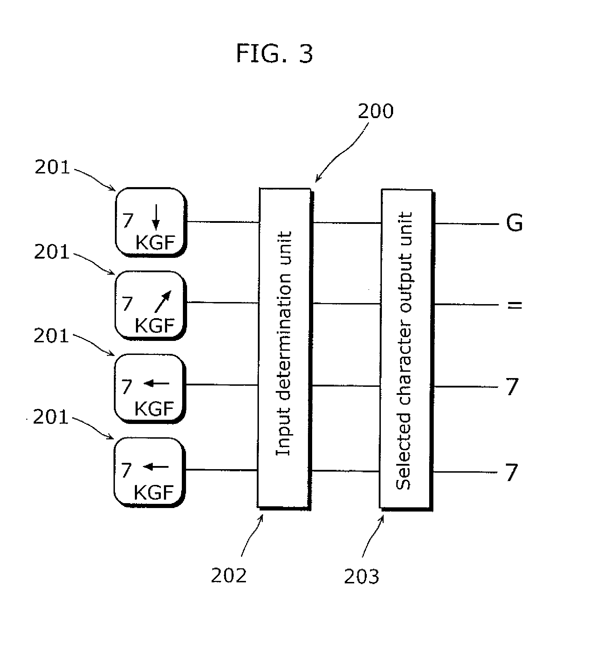

FIG. 3 is a diagram showing a touch input key device described in Patent Reference 1.

The touch input key device 200 includes: character keys 201 each of which is labeled with at least two characters on a surface; an input determination unit 202 which detects that a character key is touched and which is capable of determining a movement direction in a bar-touch input with which an input is made by moving more than a predetermined distance from a point touched first in an area of the character key without releasing the touch; a selected character output unit 203 which selects a character labeled in the movement direction with reference to a reference position of the character key according to the movement direction determined by the input determination unit and which outputs the selected character. With the touch key input device 200, it is possible to input any one character from among plural characters labeled on the character key 201 by moving a finger to a direction of the character desired to input, using the touch input key.

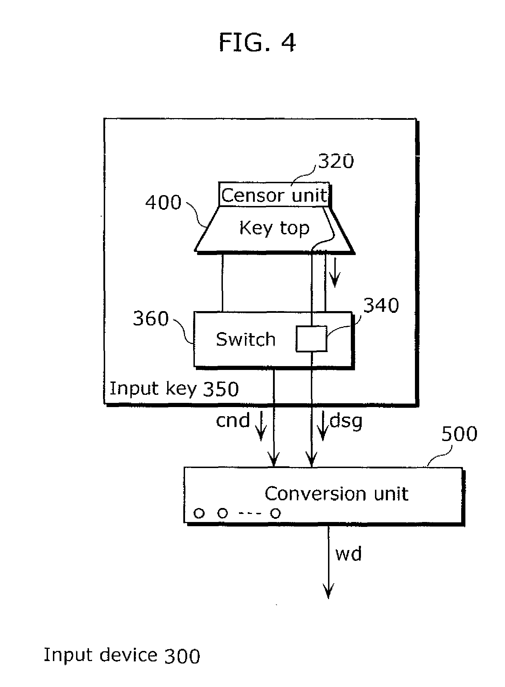

FIG. 4 is a diagram showing an input device described in Patent Reference 2.

The input device 300 includes: an input key 350 to which plural characters or symbols are assigned; a sensor unit 320 which detects a pressed position of a finger on a surface of a key top 400; a movement direction detection unit 340 which detects a movement direction when the finger or the like moves on the surface of the key top 400 by seeking a change of the pressed position of the finger or the like detected by the sensor unit 320; a switch 360 which changes its status when the key top 400 is pressed; a conversion unit 500 which converts the status of the switch 360 and the movement direction detected by the movement direction detection unit 340 into character information. Accordingly, when the input key 350 is pressed, it is possible to select, as input information, information associated with the movement direction detected by the movement direction detection unit 340. Thus, the number of times for pressing the input key for a character input is decreased, and it becomes possible to specify a character to be inputted with much easier operation.
Patent Reference 1: Japanese Unexamined Patent Application Laid-Open Publication No. 2003-15808
Patent Reference 2: Japanese Unexamined Patent Application Laid-Open Publication No. 2005-44339

### Disclosure of Invention

### Problems that Invention is to Solve

However, according to the touch input key device 200 of Patent Reference 1 or the input device 300 of Patent Reference 2, the character associated with the movement direction is selected. Consequently, it is required to associate a considerable number of characters with one key when an input of a *kana* character, an alphanumeric character, or the like is allowed within a limited space, such as a numeric keypad of a mobile phone. However, when the considerable number of characters is associated with the key, it increases the likelihood that a subtle difference in the movement direction causes a user to select an originally unintended character, and operability drastically deteriorates.

Furthermore, in the above-mentioned case, the user is required to pay attention to the subtle difference in the movement direction to avoid an incorrect input, which may cause the mental and physical fatigue.

The present invention has been devised to solve the problem about the incorrect input caused by the subtle difference in the movement direction and has an object of providing an input device which can lighten the user's mental and physical load.

### Means to Solve the Problems

In order to achieve the above-mentioned object, the input device according the present invention is an input device which has at least one input key and which includes: an association storage unit which stores an array of plural information in association with the input key, the plural information each having an order; a selection unit which selects, from the array, predetermined information as input information; a touch detection unit which detects that an object touches a surface of the input key; and a movement relevant information detection unit which detects movement relevant information concerning a movement of a contact point between the surface of the input key and the object, the contact point being detected by the touch detection unit. In the input device, the selection unit selects, from the array, information having a predetermined order stored in association with the input key on which the touch detection unit detects the touch by the object, based on the movement relevant information.

This allows the user to retrieve desired information from an array of information by only sliding a finger on the input key, and the user does not need to pay attention to a subtle difference in a movement direction. As a result, it becomes possible to lighten mental and physical load.

Here, the input key may be a push-type input key, and the input device may further include: a press detection unit which detects that the input key is pressed; and a determination unit which determines, as the input information, the predetermined information selected by the selection unit, when the press detection unit detects the press.

This allows the user to determine information to be inputted by pressing the input key once. Thus, the load put on the user's hand and finger used for operation is lightened, which allows the comfortable operation with the lightened mental and physical load. Furthermore, in addition to the above-mentioned effect, the information to be inputted can be determined by an operation different from an operation for retrieving the desired information, it is possible to prevent incorrect input.

Moreover, the movement relevant information detection unit may be a movement detection unit which detects that the object touching the surface of the input key moves on the surface of the input key, and the selection unit may select other information which is present in the array where the predetermined information is present and which is different from the predetermined information selected by the selection unit, in the case where the movement detection unit detects the movement.

Consequently, when the user wants to select other information which is different from the information selected by the selection unit, it becomes possible to retrieve the desired information by only moving the finger on the input key. Additionally, in the case where a movement of the finger changes, one at a time, an order with reference to information included in an array (e.g. the 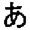 column of the Japanese syllabary), since it is possible to predict the information whose order is changed according to the number of times for sliding the finger on the input key, it is also possible to touch type. Thus, since the user does not need to check the arranged position of the characters and the like, the comfortable operation with the lightened mental and physical load is made possible.

Furthermore, the movement relevant information detection unit may be a movement direction detection unit which detects a movement direction of the object that moves on the surface of the input key, the object touching the surface of the input key, and the selection unit may select information having an order subsequent to an order of the predetermined information selected by the selection unit, in the case where the movement direction detected by the movement direction detection unit is a first movement direction, or to select information having an order antecedent to an order of the predetermined information, in the case where the movement direction detected by the movement direction detection unit is a second direction.

This allows the user to sequentially select information by repeated movement of the finger in one direction, and it is possible to select information in reverse sequence when moving the finger in a direction opposite to the above direction. For this reason, the user can perform a selection operation and an input operation of the information with the finger movement only in two directions. Thus, the user does not need to pay attention to the subtle difference in the movement direction, and it becomes possible to lighten the mental and physical load. It should be noted that the first movement direction may be upward or rightward, and the second movement direction may be downward or leftward.

Moreover, the movement relevant information detection unit may be a movement speed detection unit which detects a movement speed of the object that moves on the surface of the input key, the object touching the surface of the input key, and the selection unit may select other information which is present in the array where the predetermined information selected by the selection unit is present, the selection being made based on the movement speed detected by the movement speed detection unit, and the other information having an order changed from an order of the predetermined information being a base point for the chance.

Accordingly, in the case of moving the finger on the input key quickly, since it is possible to retrieve the information by skipping according to the movement speed, input speed is improved and further comfortable operation can be realized.

In addition, the movement relevant information detection unit may be a movement amount detection unit which detects a movement amount of the object that moves on the surface of the input key, the object touching the surface of the input key, and the selection unit may select other information which is present in the array where the predetermined information selected by said selection unit is present, the selection being made based on the movement amount detected by said movement amount detection unit, and the other information having an order changed from an order of the predetermined information being a base point for the change.

As a result, since even moving the finger on the input key once, in the case where its movement amount (distance) is large, allows the information to be retrieved by skipping according to the amount, the input speed is improved and the comfortable operation can be realized.

Furthermore, the selection unit may select: i) the predetermined information by returning from a last order to a first order in the array, in the case of selecting information subsequent to the last order in the array; and ii) the predetermined information by returning to the last order in the array, in the case of selecting information antecedent to the information having the first order in the array.

Thus, for example, in the case where respective Japanese characters " 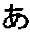 ", " 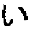 ", " 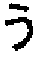 ", " 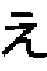 ", and " 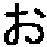 " in order are assigned to one input key, when it is desired to retrieve the character " 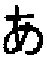 " after the character " 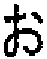 " was retrieved by sliding the finger downward five times, instead of sliding the finger upward four times, it is only necessary to slide the finger downward once only. Similarly, when it is desired to retrieve the character " 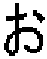 " after the character " 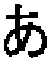 " was retrieved, instead of sliding the finger downward four times, it is only necessary to slide the finger upward once only. Thus, the load put on the user's hand and finger used for operation is lightened, which allows the comfortable operation with the lightened mental and physical load.

Accordingly, the information may be character-related information. This allows a desired character to be selected by only sliding the finger on the input key even in the case of inputting successive characters, and it is not necessary to pay attention to the subtle difference in the movement direction of a fingertip. Thus, the load put on the user's hand and finger used for operation is lightened, which allows the comfortable operation with the lightened mental and physical load.

In addition, the array may be equivalent to one column of the Japanese syllabary. As this allows, for example, each column of the Japanese syllabary to be assigned to ten input keys, it facilitates to retrieve the desired character when inputting a *hiragana* character.

Furthermore, the array may be equivalent to the Japanese syllabary. This allows all of the *hiragana* characters to be retrieved on one input key, and it becomes possible to eliminate the time and labor for moving the finger to other input key.

Here, the above-mentioned character-related information is information indicating at least one of a character, a numeral, and a symbol. The characters include not only the Japanese *hiragana* and *katakana* characters and Chinese characters but also alphabets, the Korean characters, Chinese, and so on. In other words, the characters may be symbols used by humans for mutual communication. Moreover, the numerals include not only Arabic numerals but also Roman numerals and Chinese numerals. Further, the symbols include not only symbols, such as "!", "?", and punctuation, used concomitantly with the character input, but also so-called emoticons and icons.

It should be noted that the present invention can be realized not only as such input device, but also as a mobile terminal including such input device, as an input method having characteristic units included by such input device as steps, and as a program which causes a computer to execute these steps. Additionally, it goes without saying that such program can be distributed via recording media, such as CD-ROM, and transmission media, such as the Internet.

### Effects of the Invention

As is obvious from the above description, the input device according to the present invention allows the user to retrieve the desired information from the array of information by only sliding the finger on the input key, and the mental and physical load to be lightened since the user does not need to pay attention to the subtle difference in the movement direction

### Brief Description of Drawings

FIG. 1 is an external view of a conventional mobile terminal.
FIG. 2 is a diagram for describing a load put on a thumb of a user in operating the conventional mobile terminal.
FIG. 3 is a diagram showing a touch input key device described in Patent Reference 1.
FIG. 4 is a diagram showing an input device described in Patent Reference 2.
FIG. 5 is an external view of a mobile terminal having an input device according to a first embodiment.
FIG. 6 is a function block diagram of a chief part of the input device according to the first embodiment.
FIG. 7 is a diagram conceptually showing an association table stored in an association storage unit.
FIG. 8 is a graphical illustration of a touch detection unit and a press detection unit.
FIG. 9 is a diagram conceptually showing an association table held in a selection unit.
FIG. 10 is a diagram conceptually showing an association table held in the selection unit.
FIG. 11 is a diagram showing a configuration of the input device according to the first embodiment.
FIG. 12 is a flow chart showing operations of the input device according to the first embodiment.
FIG. 13 is a diagram showing a character input operation by the user.
FIG. 14 a diagram showing the character input operation by the user.
FIG. 15 is a diagram showing the character input operation on an input key by the user.
FIG. 16 is an external view of a mobile terminal having an input device according to a second embodiment.
FIG. 17 is a diagram showing a configuration of the input device according to the second embodiment.
FIG. 18 is a flow chart showing operations of the input device according to the second embodiment.
FIG. 19 a diagram showing a character input operation by a user.
FIG. 20 is a diagram showing the character input operation by the user.
FIG. 21 is an external view of a mobile terminal having an input device according to a third embodiment.
FIG. 22 is a diagram showing a configuration of the input device according to the third embodiment.
FIG. 23 is a flow chart showing operations of the input device according to the third embodiment.
FIG. 24 is a diagram showing a character input operation by a user.
FIG. 25 is a diagram showing the character input operation by the user.
FIG. 26 is a diagram showing another determination operation procedure adopted in the present invention.
FIG. 27 is a diagram showing another determination operation procedure adopted in the present invention.
FIG. 28 is a diagram showing another determination operation procedure adopted in the present invention.
FIG. 29 is a diagram showing another determination operation procedure adopted in the present invention.

### Numerical References

1, 21, 31 Input device
2 First chassis
3 Second chassis
4 Hinge
5 Antenna
6 Speaker
7 Display unit
8 Audio input unit
9, 29, 39 Input key
11 Character conversion key
12 Enter key
13 Selector key
70 Touch detection unit
71 Association storage unit
72 Selection unit
73 Temporary storage unit
74 Press detection unit
75 Determination unit
76 Determined information memory unit
77 Motion detection unit
77a Movement direction detection unit
77b Movement speed detection unit
77c Movement amount detection unit
77d Movement detection unit
100 Mobile terminal
101 Operation unit of conventional mobile terminal
102 Display unit of conventional mobile terminal
103 Speaker of conventional mobile terminal
102 Microphone of conventional mobile terminal
200 Touch input key device according to Patent Reference 1
201 Character key of touch input key device according to Patent Reference 1
203 Input determination unit of touch input key device according to Patent Reference 1
203 Selected character output unit of touch input key device according to Patent Reference 1
300 Input device according to Patent Reference 2
350 Input key according to Patent Reference 2
320 Censor unit according to Patent Reference 2
340 Movement direction detection unit according to Patent Reference 2
360 Switch according to Patent Reference 2
400 Key top according to Patent Reference 2
500 Conversion unit according to Patent Reference 2

### Best Mode for Carrying Out the Invention

Hereinafter, preferred embodiments of the present invention are described in detail with reference to the drawings. It should be noted that in each of the following drawings, the same elements are described using the same numerical references.

### (First Embodiment)

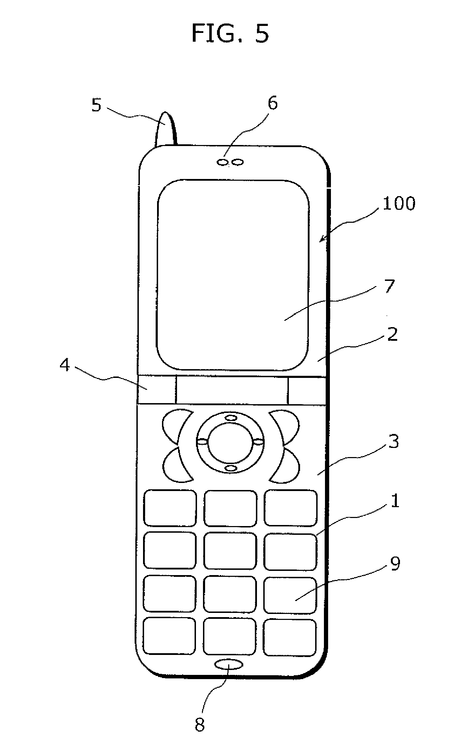

A first embodiment is described using FIGS. 5 to 15.

FIG. 5 is an external view of a mobile terminal having an input device 1 according to the first embodiment of the present invention.

Including a first chassis 2 and a second chassis 3, the mobile terminal 100 is foldable. The first chassis 2 and the second chassis 3 are connected with a hinge 4. The first chassis 2 includes a speaker 6 which outputs audio and a display unit 7 which displays information inputted with the input device 1. The second chassis 3 is provided with an audio input unit 8 which inputs the audio and the input device 1 having plural push-type input keys 9. The top edge of the mobile terminal 100 is provided with an antenna 5. Although the mobile terminal 100 has functions for realization of making/having a phone call, receiving/sending an e-mail, connecting to the Internet, and so on, these functions are not described here as the present invention does not focus on them.

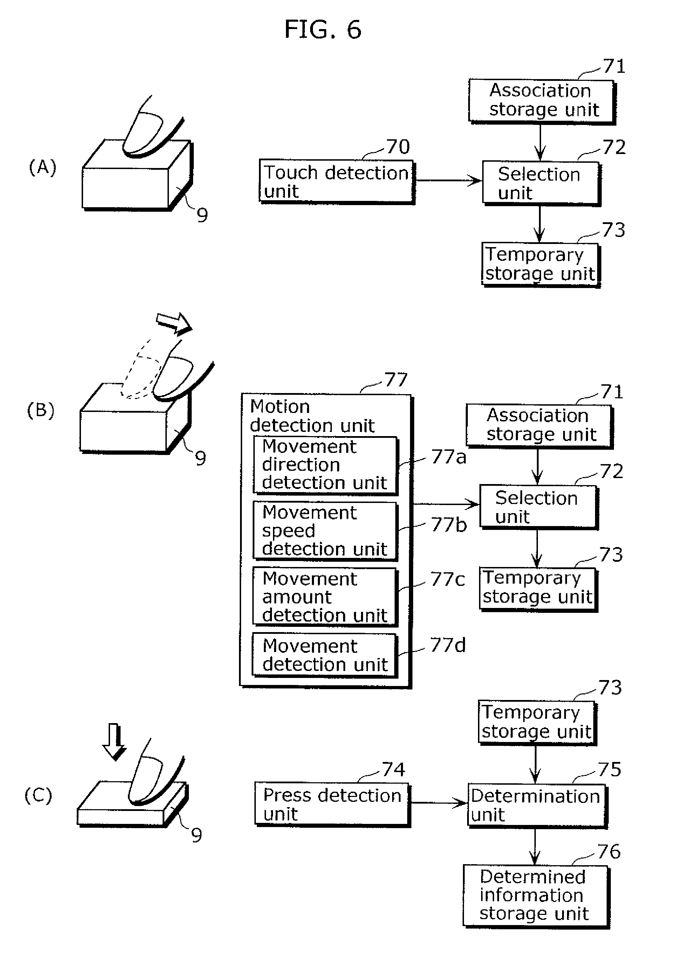

FIG. 6 is a function block diagram of a chief part of the input device 1 according to the first embodiment of the present invention. The input device 1 is an input device having at least one input key, and functionally includes: a touch detection unit 70; an association storage unit 71; a selection unit 72; a temporary storage unit 73; a press detection unit 74; a determination unit 75; a determined information storage unit 76; and a motion detection unit 77. The motion detection unit 77 involves: a movement direction detection unit 77a; a movement speed detection unit 77b; a movement amount detection unit 77c; and a movement detection unit 77d. Here, the motion detection unit 77 is equivalent to a movement relevant information detection unit of the present invention.

As shown in FIG. 6(A), the touch detection unit 70 detects whether or not an object touches a surface of the input key 9. The association storage unit 71 stores an array composed of plural character-related information or function information, the plural information each having an order in association with the input key 9. It should be noted that the character-related information is information indicating at least one of a character, a numeral, and a symbol, and the function information is information concerning functions of the input device 100, such as "e-mail", "web", "setting", "camera", and so on.

When it is detected that the object touches the surface of the input key 9, the selection unit 72 selects, as input information, predetermined character-related information or function information included in the array associated with the input key 9. The information selected in this manner is temporarily stored in the temporary storage unit 73. Moreover, when it is detected that the object touching the surface of the input key 9 moves on the surface of the input key 9, the character-related information or the function information having the order in the array is selected as the input information, based on the character-related information or the function information stored in the temporary storage unit 73 and a motion of a finger detected by the motion detection unit 77. When the input information is selected in this manner, the input information temporarily stored in the temporary storage unit 73 is updated to newly selected input information. That is to say, even once the object touching the surface of the input key 9 moves away from the surface of the input key 9, the information temporarily stored in the temporary storage unit 73 is not lost. When the object touches the surface of the same input key 9 again, the selection unit 72 is designed to first select the information temporarily stored in the temporary storage unit 73.

As shown in FIG. 6(B), the motion detection unit 77 detects a motion of the object touching the surface of the input key 9. In other words, the movement direction detection unit 77a detects a movement direction of the object touching the surface of the input key 9. In addition, the movement speed detection unit 77b detects a movement speed of the object touching the surface of the input key 9. Further, the movement amount detection unit 77c detects a movement amount of the object touching the surface of the input key 9. It should be noted that the movement detection unit 77d is described later.

The selection unit 72 selects, from among the character-related information or the function information stored in the association storage unit 71, specific information as the input information, based on at least one of the movement direction, the movement speed, and the movement amount (described later). When the input information is selected in this manner, the input information temporarily stored in the temporary storage unit 73 is updated to the newly selected input information.

As shown in FIG. 6(C), the press detection unit 74 detects that the input key 9 is pressed. When the press detection unit 74 detects that the input key 9 is pressed, the determination unit 75 determines, as the input information, the character-related information or the function information stored in the temporary storage unit 73.

It should be noted that the selection unit 72, the determination unit 75, and the motion detection unit 77 can be realized, for example, by executing a program with a Central Processing Unit (CPU). The CPU for realizing these units may be included, as the same CPU, in the mobile terminal 1. Furthermore, the association storage unit 71 and the determined information storage unit 76 can be realized with media, such as a Random Access Memory (RAM), a Hard Disc (HD), and a flash memory. A storage unit for realizing these units may be included, as the same storage unit (the same RAM or the like), in the mobile terminal 1.

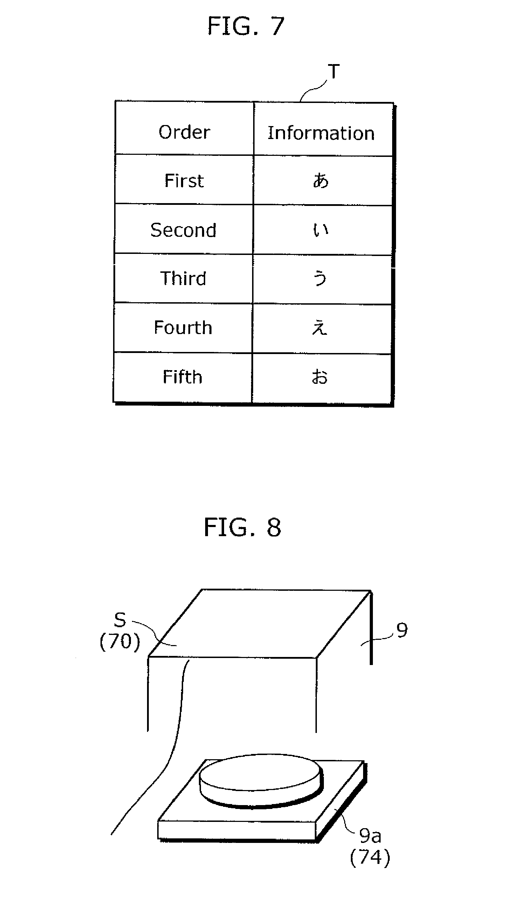

FIG. 7 is a diagram conceptually showing an association table T stored in the association storage unit 71. Here, a condition that an array equivalent to the 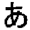 column of the Japanese syllabary is associated with a specific input key 9 is shown. That is to say, the condition that the first, second, third, fourth, and fifth information are associated with Japanese characters " 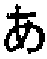 ", " 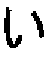 ", " 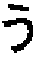 ", " 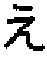 ", and " 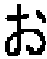 " respectively is shown.

FIG. 8 is a graphical illustration of the touch detection unit 70 and the press detection unit 74.

The touch detection unit 70 is a means to detect whether or not the object touches the surface of the input key 9, and specifically a capacitive touch sensor S provided on the input key 9. The capacitive touch sensor S generates an even electric field on the sensor surface as an even electric pressure is given to the four corners of the sensor. When the sensor surface is touched by a user's finger in this condition, since a change in capacitance that is proportional to a distance from the four corners of the sensor to the finger occurs, a coordinate position of the finger can be calculated in accordance with the change in capacitance at the four corners. The touch detection unit 70 judges whether or not the object touches the sensor surface, based on the detected change in capacitance. The motion detection unit 77 calculates a change in X-Y coordinate of an area being touched by the user from the change in capacitance detected by the touch detection unit 70. Moreover, the movement amount, the movement distance, and the movement direction are detected based on the change and so on. Further, the movement speed is calculated from the movement amount which varies per unit time.

It should be noted that it is possible to distinguish between the object being on the surface of the input key 9 and the object moving on the surface of the input key 9 depending on whether or not the movement amount or the movement distance is more than a threshold value. In other words, it is judged that the object is moving on the surface of the input key 9 in the case where the movement amount or the movement distance is more than the threshold value, and conversely it is judged that the object touches the surface of the input key 9 in the case where the movement amount or the movement distance is less than the threshold value.

The press detection unit 75 is a means to detect that the input key 9 is pressed, and specifically a key contact point 9a. That is to say, the push-type input key is adopted in the present embodiment. The push-type input key is structurally a single physical key, and a key top of the push-type input key mechanically moves vertically.

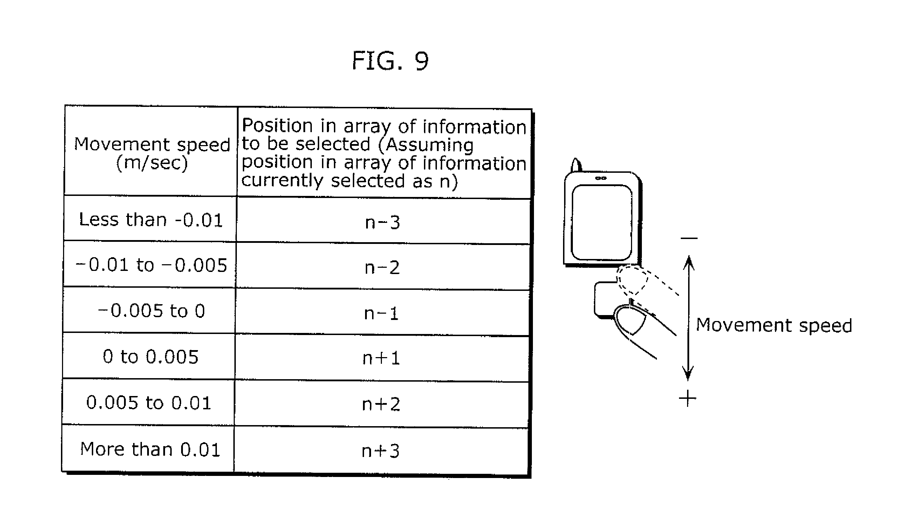

FIG. 9 is a diagram conceptually showing an association table held in the selection unit 72. As shown in this figure, the selection unit 72 holds the association table which shows the association between the movement speed detected by the movement speed detection unit 77b and a position of information to be selected in an array. Here, assuming a position of currently selected information in an array as n, the position of the information to be selected in the array is shown. In addition, the movement speed detection unit 77b detects a positive movement speed in the case where the finger moves from the top to the bottom, and conversely detects a negative movement speed in the case where the finger moves from the bottom to the top.

It is assumed that the character " 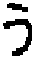 " which occupies the third position in the 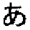 column of the Japanese syllabary is currently selected. In this case, where n=3, the selection unit 72 selects the character " 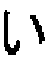 " which occupies the second position when the movement speed is -0.005 to 0 [m/sec] or the character " 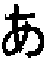 " which occupies the first position when the movement speed is - 0.01 to -0.005 [m/sec] or the character " 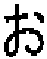 " which occupies the zeroth (fifth) position when the movement speed is less than -0.01 [m/sec]. By contraries, the selection unit 72 selects the character " 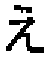 " which occupies the fourth position when the movement speed is 0 to 0.005 [m/sec] or the character " 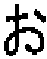 " which occupies the fifth position when the movement speed is 0.005 to 0.01 [m/sec] or the character " 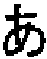 " which occupies the sixth (first) position when the movement speed is more than 0.01 [m/sec].

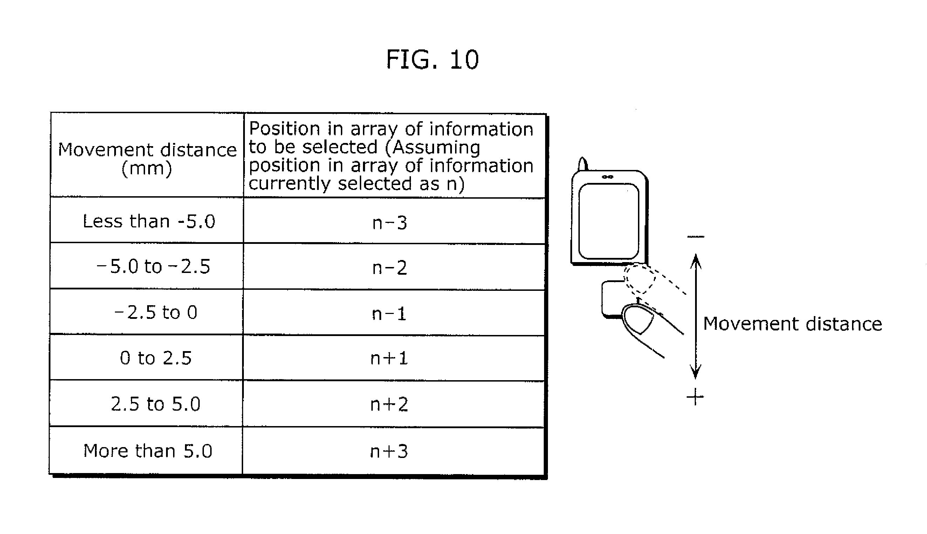

FIG. 10 is a diagram conceptually showing another association table held in the selection unit 72. As shown in this figure, the selection unit 72 holds the association table which shows the movement amount (movement distance) detected by the movement amount detection unit 77c and the position of the information to be selected in the array. Here, assuming the position of the currently selected information in the array as n, the position of the information to be selected in the array is shown. Furthermore, the movement amount detection unit 77c detects a positive movement distance in the case where the finger moves downward, and conversely detects a negative movement distance in the case where the finger moves upward.

It is assumed that the character " 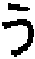 " which occupies the third position in the 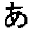 column of the Japanese syllabary is currently selected. In this case, where n=3, the selection unit 72 selects the character " 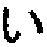 " which occupies the second position when the movement distance is -2.5 to 0 [mm] or the character " 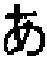 " which occupies the first position when the movement distance is -5.0 to -2.5 [mm] or the character " 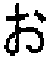 " which occupies the zeroth (fifth) position when the movement distance is less than -5.0 [mm].By contraries, the selection unit 72 selects the character " 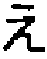 " which occupies the fourth position when the movement distance is 0 to 2.5 [mm] or the character " 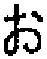 " which occupies the fifth position when the movement speed is 2.5 to 5.0 [mm] or the character " 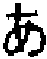 " which occupies the sixth (first) position when the movement speed is more than 5.0 [mm].

As discussed previously, the selection unit 72 selects information by returning from the last-ordered " 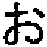 " to the first-ordered " 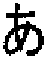 " in the case selecting the information subsequent to the last-ordered " 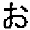 " in the held association table, and selects information by returning from the first-ordered " 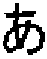 " to the last-ordered " 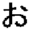 " in the case selecting the information antecedent to the information of the first-ordered " 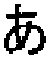 " in the association table. This will result in decreasing the number of times for sliding the finger, which lightens the load put on the user's hand and finger used for operation and allows a comfortable operation with the lightened mental and physical load.

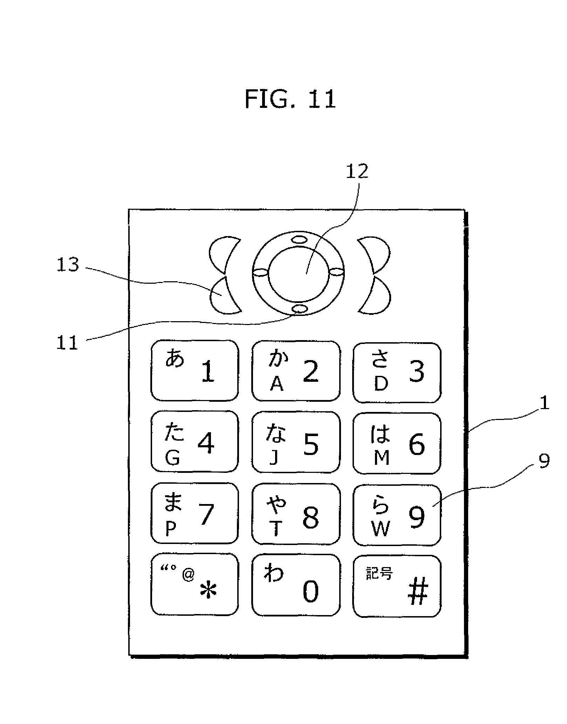

FIG. 11 is a diagram showing a configuration of the input device 1 according to the first embodiment. The input device 1 includes twelve input keys 9, and these input keys 9 are arranged in a 3 × 4 matrix. One numeral selected from numerals 0 to 9 or two types of symbol (labeled as 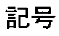 in the figure) "*" and "#", the 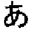 to 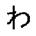 columns of the Japanese syllabary, and alphabets A to Z are assigned to each of the input keys 9.Specifically, the 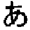 column of the Japanese syllabary is assigned to an input key to which numeral 1 is assigned; the 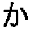 column of the Japanese syllabary and alphabets A, B, and C are assigned to an input key to which numeral 2 is assigned; the 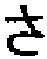 column of the Japanese syllabary and alphabets D, E, and F are assigned to an input key to which numeral 3 is assigned; the 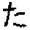 column of the Japanese syllabary and alphabets G, H, and I are assigned to an input key to which numeral 4 is assigned; the 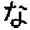 column of the Japanese syllabary and alphabets J, K, and L are assigned to an input key to which numeral 5 is assigned; the 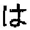 column of the Japanese syllabary and alphabets M, N, and O are assigned to an input key to which numeral 6 is assigned; the 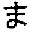 column and alphabets P, Q, R, and S are assigned to an input key to which numeral 7 is assigned; the 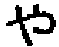 column of the Japanese syllabary and alphabets T, U, and V are assigned to an input key to which numeral 8 is assigned; the 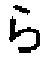 column of the Japanese syllabary and alphabets W, X, Y, and Z are assigned to an input key to which numeral 9 is assigned; voiced sound marks and punctuation marks are assigned to an input key to which symbol * is assigned; the 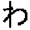 column of the Japanese syllabary is assigned to an input key to which numeral 0 is assigned; and other symbols are assigned to an input key to which symbol # is assigned.

It should be noted that the input device 1 includes a character conversion key 11 for converting an inputted character into a Chinese character or a *katakana* character (the Japanese alphabet), an enter key 12 for entering an input, and a selector key 13 for switching an input mode, such as *hiragana, katakana,* numeral, and alphabet, in addition to the input key 9.

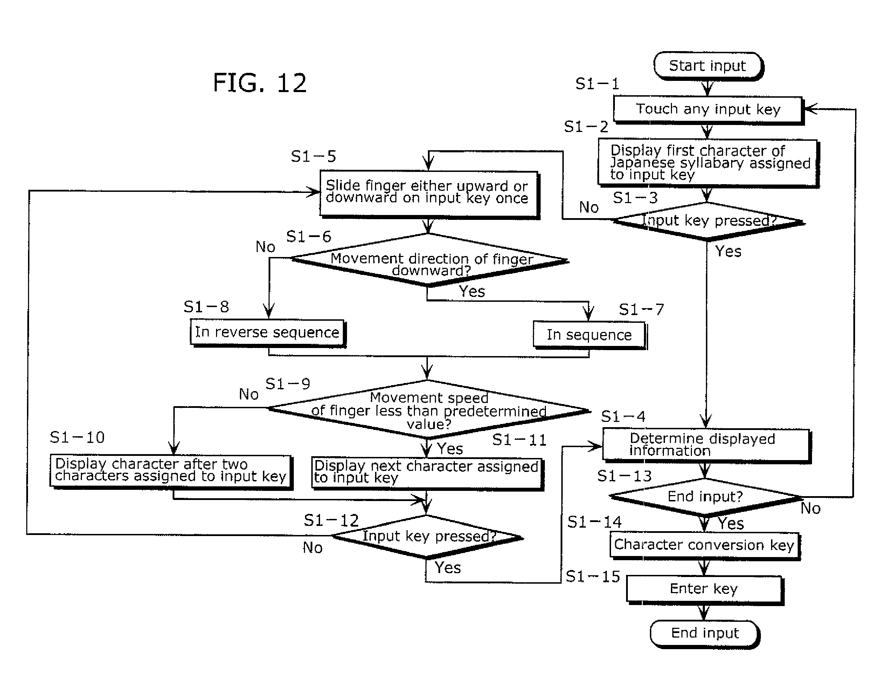

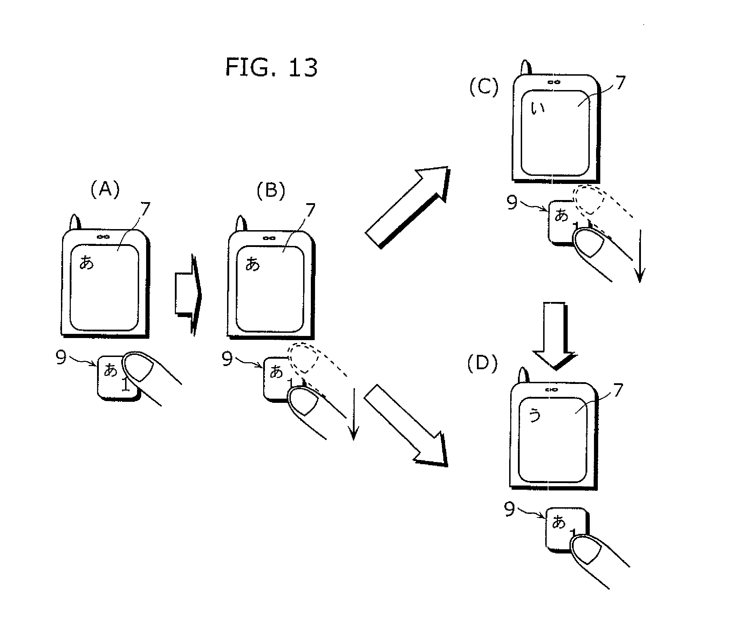

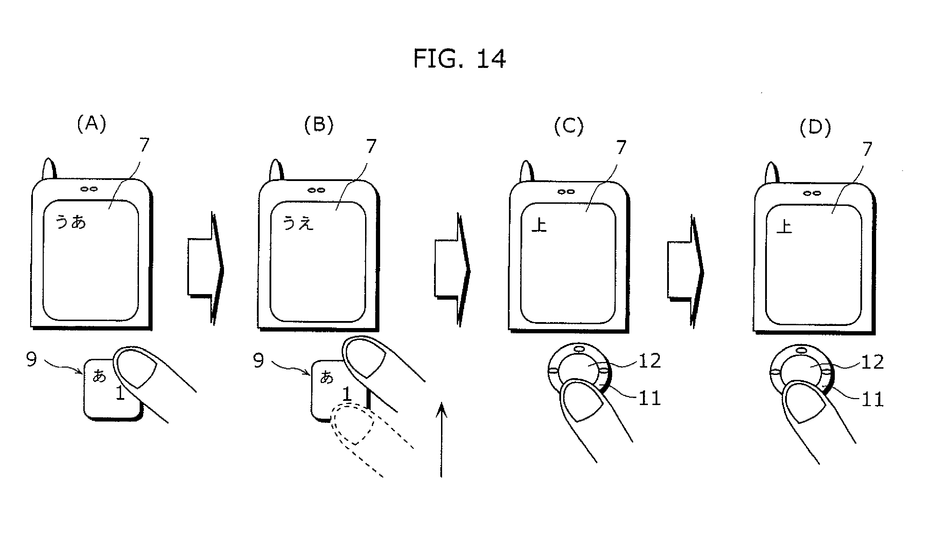

FIG. 12 is a flow chart showing operations of the input device 1 according to the first embodiment of the present invention. FIGS. 13 and 14 are diagrams showing a character input operation by the user using a mobile terminal 100 which has the input device 1 according to the first embodiment of the present invention, and an operation procedure compliant with the flow chart in FIG. 12.

Hereinafter, the operations of the input device 1 according to the first embodiment of the present invention are described using FIGS. 12 to 14. It should be noted that concerning an alphabet input, a *katakana* input, a numeral input or a combination of these inputs, it is possible to change the input mode using the character conversion key 11 or the selector key 13. The operation itself follows the same flow chart.

First, when the user touches the input key 9 to which the 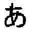 column of the Japanese syllabary is assigned (S1-1 in FIG. 12), the 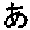 column's first character " 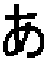 " selected from the association storage unit 71 by the selection unit 72 is stored in the temporary storage unit 73 and at the same time displayed on the display unit 7 (S1-2 in FIG. 12), as shown in FIG. 13(A). At this time, in the case where the user desires to input the character " 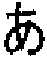 ", when the input key 9 is pressed (S1-3: Yes in FIG. 12), the press detection unit 74 detects the press and the determination unit 75 can determine, as the input information, the character " 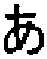 " stored in the temporary storage unit 73 (S1-4 in FIG. 12).

Moreover, when the user slides the finger either upward or downward with reference to the mobile terminal 100 on the input key 9 once (S1-5 in FIG. 12) without pressing the input key 9 (S1-3: No in FIG. 12), the selection unit 72 selects, from the association storage unit 71, a character associated with the movement direction and movement speed of the finger detected by the movement direction detection unit 77a and the movement speed detection unit 77b, and the selected character is displayed on the display unit 7. For example, as shown in FIG. 13(B), when the finger is slid downward once (S1-6: Yes in FIG. 12), characters of the 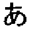 column are displayed in sequence (in sequence of " 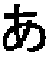 "→" 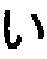 "→" 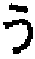 "→" 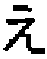 "→" 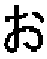 ") (S1-7 in FIG. 12). At this time, in the case where the movement speed of the slid finger is less than a predetermined value (S1-9: Yes in FIG. 12), the selection unit 72 selects the character " 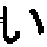 " from the association storage unit 71 and stores it in the temporary storage unit 73, and the character " 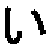 " is displayed on the display unit 7 (S1-11 in FIG. 12), as shown in FIG. 13(C). Here, when the finger is slid downward again in the same manner at below a predetermined speed without pressing the input key 9 (S1-12: No in FIG. 12), the selection unit 72 selects the character " 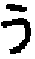 " from the association storage unit 71 and stores it in the temporary storage unit 73, based on the information of " 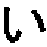 " held in the temporary storage unit 73 and the detected movement direction and the detected movement speed, as shown in FIG. 13(D). As a result, the character " 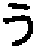 " is displayed on the display unit 7.

It should be noted that, with the character " 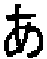 " being displayed on the display unit 7, in the case where the finger is slid downward on the input key 9 at more than the predetermined speed (S1-9: No in FIG. 12), this one sliding operation allows the character " 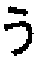 " to be displayed on the display unit 7 (S1-10 in FIG. 12).

Here, the above-mentioned "predetermined value" can be obtained from the association table shown in FIG. 9. Specifically, in the case where the finger is moved on the input key 9 at 0 to 0.05 m/sec with the character " 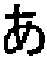 " being selected, the character " 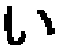 " is displayed on the display unit, and in the case where the finger is moved at 0.05 to 0.1 m/sec, the character " 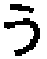 " is displayed on the display unit. Obviously, in the case where displaying the characters " 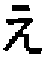 " and " 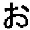 " is desired, it is only necessary to increase the movement speed of the finger.

In this condition, when the user presses the input key 9 (S1-12: Yes in FIG. 12), the press detection unit 74 detects the press and the determination unit 75 can determine, as the input information, the character " 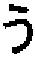 " stored in the temporary storage unit 73 (S1-4 in FIG. 12).

In the case further continuing the input operation (S1-13: No in FIG. 12), when the input key 9 to which the 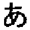 column is assigned is touched, the 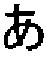 column' s first character " 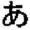 " selected from the association storage unit 71 by the selection unit 72 is stored in the temporary storage unit 73 and at the same time displayed on the display unit 7 (S1-2 in FIG. 12), as shown in FIG. 14(A). In this condition, when the finger is slid upward with reference to the mobile terminal 100 on the input key 9 once (S1-6: No in FIG. 12), the characters of the 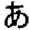 column are displayed in reverse sequence (in sequence of " 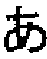 "→" 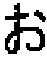 "→" 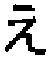 →" 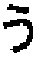 →" 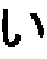 ) (S1-8 in FIG. 12). At this time, in the case where the movement speed of the slid finger is more than the predetermined value (S1-9: No in FIG. 12), the selection unit 72 selects the character " 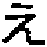 " from the association storage unit 71 and stores it in the temporary storage unit 73, and the character " 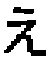 " is displayed on the display unit 7 (S1-10 in FIG. 12), as shown in FIG. 14(B).

In this condition, when the user presses the input key 9 (S1-12: Yes in FIG. 12), the press detection unit 74 detects the press and the determination unit 75 can determine, as the input information, the character " 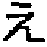 " stored in the temporary storage unit 73 (S1-4 in FIG. 12). Here, in the case ending the character input (S1-13: Yes in FIG. 12), the character conversion key 11 is pressed (S1-14 in FIG. 12) as shown in FIG. 14(C), and then the enter key 12 is pressed (S1-15 in FIG. 12) as shown in FIG. 14(D). Accordingly, inputting the character " 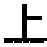 " is completed.

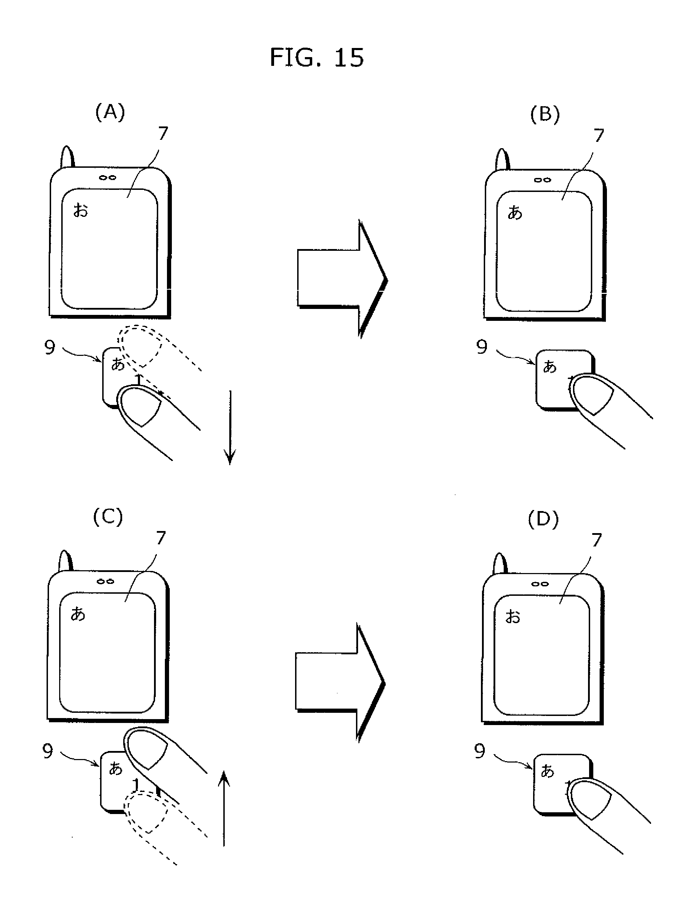

FIG. 15 is a diagram showing the character input operation on the input key 9 by the user.

As shown in FIG. 15(A), there is a case of attempting to select a character subsequent to the character " 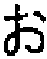 " which is the last character of the 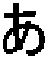 column by sliding the finger downward on the input key 9 to which the 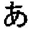 column of the Japanese syllabary is assigned. In this case, as shown in FIG. 15(B), the character " 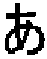 " is selected and at the same time stored in the temporary storage unit 73. The display unit 7 displays the character " 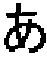 " after returning to the start of the 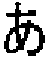 column.

Similarly, as shown in FIG. 15(C), there is a case of attempting to select a character antecedent to the character " 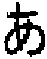 " which is the first character of the 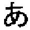 column by sliding the finger upward on the input key 9 to which the 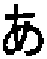 column of the Japanese syllabary is assigned. In this case, as shown in FIG. 15(D), the character " 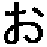 " is selected and at the same time stored in the temporary storage unit 73. The display unit 7 displays the character " 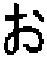 ".

This allows to decrease the number of times for necessarily sliding the finger on the input key 9 in order to reach the character to be inputted. That is to say, it is possible to decrease the number of times for inputting with the key when performing the input operation.

As described above, according to the input device 1 in the first embodiment of the present invention, it is possible to detect the vertical movement direction and movement speed of the user's finger. Accordingly, the user can make the character to be inputted displayed by only sliding the finger on the input key 9, and only pressing the input key 9 once allows one inputted character to be determined. What is more, the array (for example, the 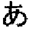 column of the Japanese syllabary) is assigned to the input key 9 and it is possible to display a character according to the number of times for sliding the finger on the input key, so that the user has no burden to memorize arranged positions of the characters and the like, and can touch type.

Thus, the user does not need to memorize the arranged positions of the characters and the load put on the user's hand and finger used for operation is also lightened, which allows the comfortable operation with the lightened mental and physical load.

Further, in the present embodiment, the movement direction detection unit 77a detects the movement direction of the user's finger, and the information selected by the selection unit 72 from the association storage unit 71 according the movement of the finger can be switched in a forward direction or a backward direction. Consequently, it becomes possible to input the information with the fewer number of operations compared to a case where the information is inputted only with the movement speed or the movement distance (movement amount), and an operation load is further lightened.

In addition, although a character subsequent to the character to be inputted is displayed by accidentally sliding the finger one extra time when sliding the finger downward on the input key 9, the character to be inputted can be displayed by sliding the finger upward only once. This way, it is possible to recover from an incorrect operation with the fewer number of operations and to shorten time for the input operation. In other words, the user can select the character-related information or the function information in sequence by repeating the finger movement in one direction, and can select the character-related information or the function information in reverse sequence when moving the finger in a direction opposite to the direction. For this reason, the user can perform a selection operation and the input operation of the character-related information or the function information with the finger movement only in two directions. As a result, since it is not necessary to pay attention to the subtle difference in the movement direction, it becomes possible to lighten the mental and physical load.

Furthermore, in the case moving the finger on the input key quickly, since it is possible to retrieve the information to be inputted by skipping other information according to the movement speed, input speed is improved and further comfortable operation can be realized.

It should be noted that although the configuration of the input keys 9 arranged in a 3 × 4 matrix is illustrated here, other key arrangements may be adopted.

Moreover, although the input operation of *hiragana* is described here as an example, other character-related information and function information, such as a *katakana* or alphabet input, can be inputted with the same operation. That is to say, when the information in the association table T of FIG. 7 is replaced with other character-related information or function information, inputting the other character-related information or function information can be realized with the same operation.

Further, although the "selector key 13" for sequentially switching to a *hiragana* input mode, a *katakana* input mode, and an alphabet input mode is illustrated, what is switched by the selector key 13 may be various functions included in the input device 1. The various functions included in the input device 1 are, for example, an "e-mail" function for sending/receiving an e-mail, a "web" function for browsing a web page, a "setting" function for changing setting information within the input device 1, and a "camera" function for starting a camera provided to the input device 1.It is needless to say that such function switching can be realized by changing a content of the above-mentioned association table T.

Further, here, although it is possible to display the character by skipping one character, such as from " 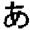 " to " 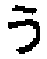 ", in the case where the movement speed is more than the predetermined speed, a method for displaying the character by skipping one character is not limited to this. In other words, by designing the movement amount detection unit 77c (see FIG. 6) to detect the movement amount (movement distance) of the finger on the input key, the character may be displayed by skipping one character in the case where the movement amount is more than a predetermined amount. The predetermined value can be obtained from the association table shown in FIG. 10. Specifically, in the case where the finger is moved on the input key 9 for 0 to 2.5 mm with the character " 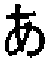 " being selected, the character " 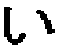 " is displayed on the display unit, and in the case where the finger is moved for 2.5 to 5.0 mm, the character " 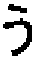 " is displayed on the display unit. Obviously, in the case where displaying the characters " 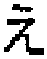 " and " 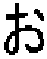 " is desired, it is only necessary to increase the movement amount of the finger. Accordingly, since even moving the finger on the input key once, in the case where its movement amount (distance) is large, allows the information to be retrieved by skipping other information according to the amount, the input speed is improved and the comfortable operation can be realized.

### (Second Embodiment)

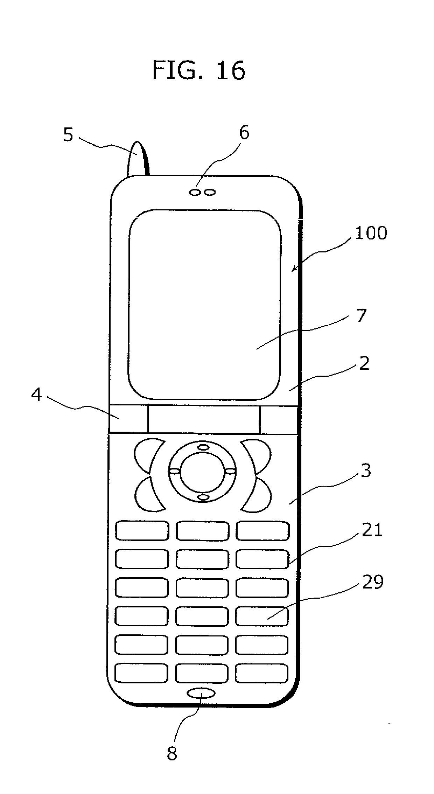

A second embodiment is described using FIGS. 16 to 20. It should be noted that the same elements as in the first embodiment which are given the same numerals are not described.

FIG. 16 is an external view of a mobile terminal having an input device 21 according to the second embodiment of the present invention. The mobile terminal is the same as in the first embodiment, except a configuration of the input device 21.

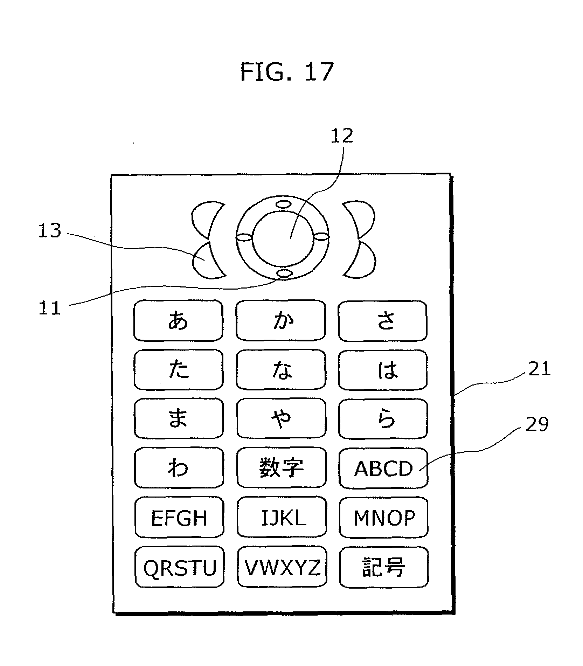

FIG. 17 is a diagram showing the configuration of the input device 21 according to the second embodiment of the present invention. The input device 21 is made up of eighteen input keys 29, and these input keys 29 are arranged in a 3 × 6 matrix.

The input keys 29 are made up of: a numeric key (labeled as 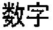 in the figure) to which numerals 0 to 9 are assigned; ten character keys to which the 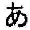 to 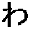 columns of the Japanese syllabary are respectively assigned; a key to which alphabets A, B, C, and D are assigned; a key to which alphabets I, J, K, and L are assigned; a key to which alphabets M, N, O, and P are assigned; a key to which alphabets Q, R, S, T, and U are assigned; a key to which alphabets V, W, X, Y, and Z are assigned; and two keys (labeled as 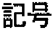 in the figure) to which symbols are assigned.

It should be noted that including the character conversion key 11, the enter key 12, and the selector key 13 in addition to the input keys 29 and providing the capacitive touch sensor 15 on the input keys 29 are the same as in the first embodiment. The difference from the first embodiment is that the selection unit 72 selects information held in the association storage unit 71 based on a horizontal movement direction and movement speed of the user's finger detected on the input key 29 by the motion detection unit 77.

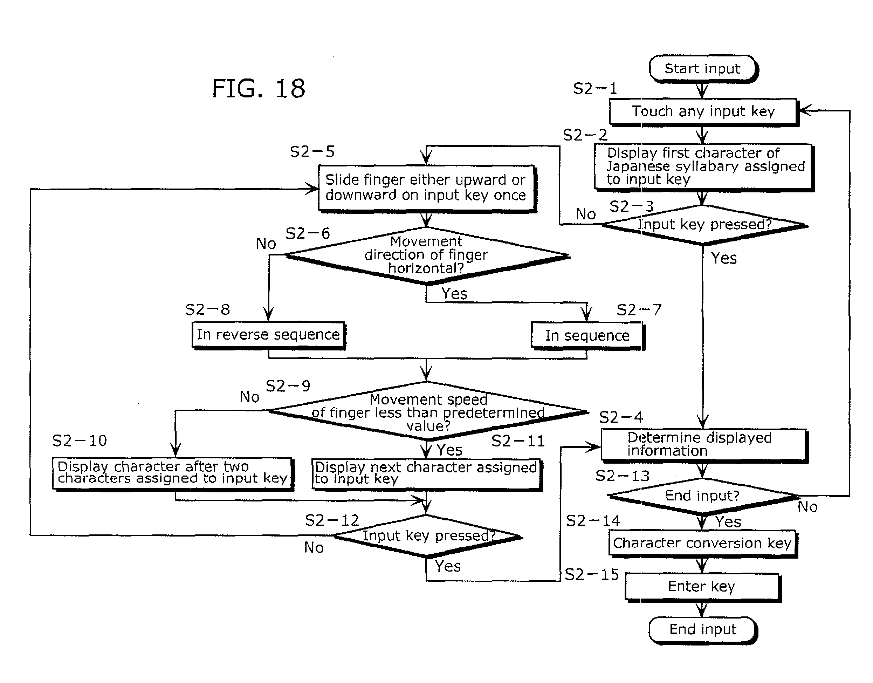

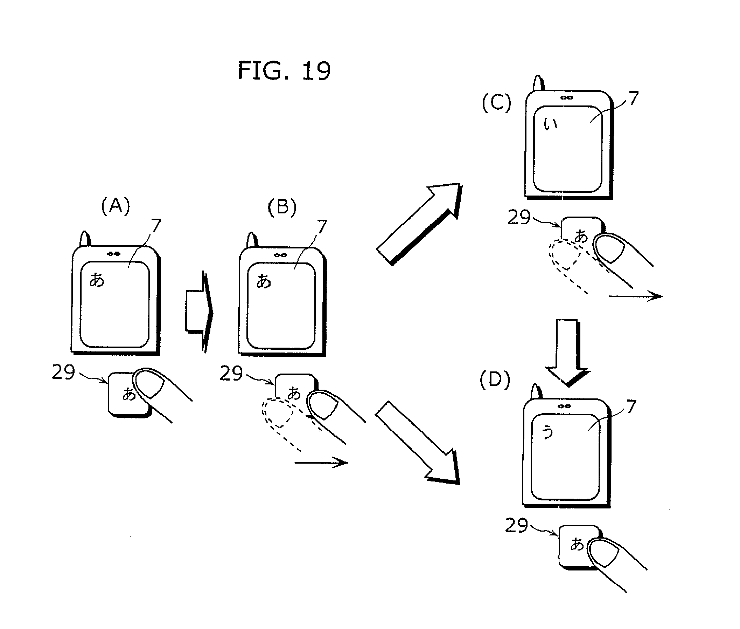

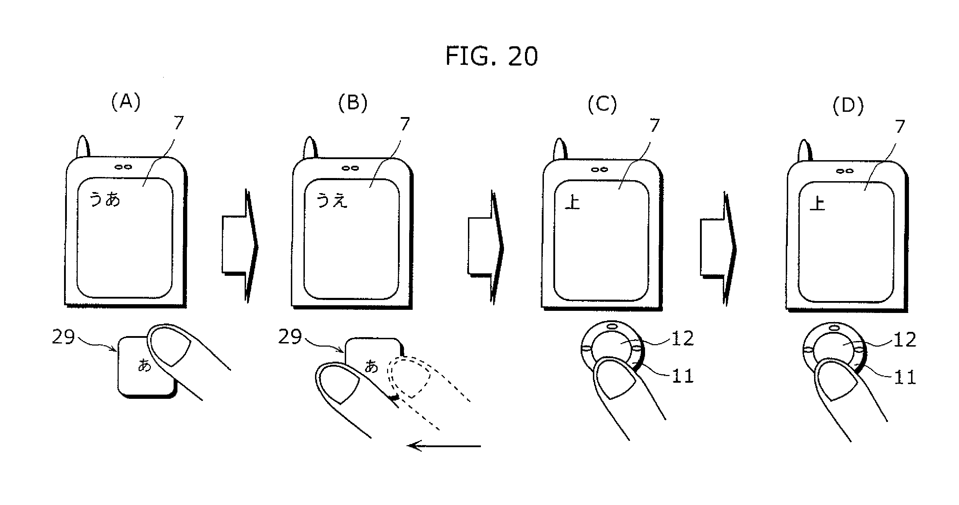

FIG. 18 is a flow chart showing operations of the input device 21 according to the second embodiment of the present invention. FIGS. 19 and 20 are diagrams showing a character input operation by the user using the mobile terminal 100 which has the input device 21 according to the second embodiment of the present invention, and an operation procedure compliant with the flow chart in FIG. 18.

Hereinafter, the operations of the input device 21 according to the second embodiment of the present invention are described using FIGS. 18 to 20. It should be noted that concerning the alphabet input, the *katakana* input, the numeral input or the combination of these inputs, it is possible to change the input mode using the character conversion key 11 or the selector key 13. The operation itself follows the same flow chart.

First, when the user touches the input key 29 to which the 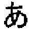 column of the Japanese syllabary is assigned (S2-1 in FIG. 18), the 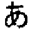 column's first character " 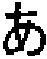 " selected by the selection unit 72 from the association storage unit 71 is stored in the temporary storage unit 73 and at the same time displayed on the display unit 7 (S2-2 in FIG. 18), as shown in FIG. 19(A). At this time, in the case where the user desires to input the character " 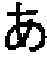 ", when the input key 29 is pressed (S2-3: Yes in FIG. 18), the press detection unit 74 detects the press and the determination unit 75 can determine, as input information, the character " 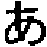 " stored in the temporary storage unit 73 (S2-4 in FIG. 18).

Furthermore, when the user slides the finger either leftward or rightward with reference to the mobile terminal 100 on the input key 29 once (S2-5 in FIG. 18) without pressing the input key 29 (S2-3: No in FIG. 18), the selection unit 72 selects, from the association storage unit 71, a character associated with the movement direction and movement speed of the finger detected by the movement direction detection unit 77a and the movement speed detection unit 77b, and the selected character is displayed on the display unit 7. For example, as shown in FIG. 19(B), when the finger is slid rightward once (S2-6: Yes in FIG. 18), the characters of the 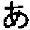 column are displayed in sequence (in sequence of " 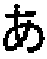 "→" 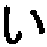 "→" 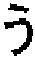 "→" 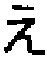 "→" 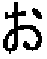 ") (S2-7 in FIG. 18). At this time, in the case where the movement speed of the slid finger is less than a predetermined value (S2-9: Yes in FIG. 18), the selection unit 72 selects the character " 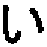 " from the association storage unit 71 and stores it in the temporary storage unit 73, and the character " 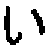 " is displayed on the display unit 7 (S2-11 in FIG. 18), as shown in FIG. 13(C). Here, when the finger is slid rightward again in the same manner at below a predetermined speed without pressing the input key 29 (S2-12: No in FIG. 18), the selection unit 72 selects the character " 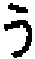 " from the association storage unit 71 and stores it in the temporary storage unit 73, based on information of " 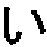 " held in the temporary storage unit 73 and the detected movement direction and the detected movement speed, as shown in FIG. 19(D). As a result, the character " 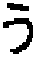 " is displayed on the display unit 7.

It should be noted that, with the character " 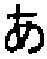 " being displayed on the display unit 7, in the case where the finger is slid rightward on the input key 29 at more than the predetermined speed (S2-9: No in FIG. 18), this one sliding operation allows the character " 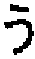 " to be displayed on the display unit 7 (S2-10 in FIG. 18).

In this condition, when the user presses the input key 29 (S2-12: Yes in FIG. 18), the press detection unit 74 detects the press and the determination unit 75 can determine, as the input information, the character " 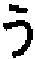 " stored in the temporary storage unit 73 (S2-4 in FIG. 18).

In the case further continuing the input operation (S2-13: No in FIG. 18), when the input key 29 to which the 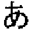 column is assigned is touched, the 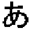 column's first character " 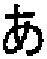 " selected by the selection unit 72 from the association storage unit 71is stored in the temporary storage unit 73 and at the same time displayed on the display unit 7 (S2-2 in FIG. 18), as shown in FIG. 20(A). In this condition, when the finger is slid leftward with reference to the mobile terminal 100 on the input key 29 once (S2-6: No in FIG. 18), the characters of the 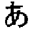 column are displayed in reverse sequence (in sequence of " 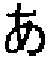 "→" 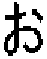 "→" 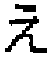 "→" 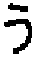 "→" 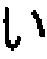 ") (S2-8 in FIG. 18). At this time, in the case where the movement speed of the slid finger is more than the predetermined value (S2-9: No in FIG. 18), the selection unit 72 selects the character " 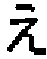 " from the association storage unit 71 and stores it in the temporary storage unit 73, and the character " 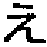 " is displayed on the display unit 7 (S2-10 in FIG. 18), as shown in FIG. 20(B).

In this condition, when the user presses the input key 29 (S2-12: Yes in FIG. 18), the press detection unit 74 detects the press and the determination unit 75 can determine, as the input information, the character " 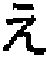 " stored in the temporary storage unit 73 (S2-4 in FIG. 18). Here, in the case ending the character input (S2-13: Yes in FIG. 18), the character conversion key 11 is pressed (S2-14 in FIG. 18) as shown in FIG. 20(C), and then the enter key 12 is pressed (S2-15 in FIG. 18) as shown in FIG. 20(D). Accordingly, inputting the character " 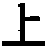 " is completed.

As described above, according to the input device 21 in the second embodiment of the present invention, it is possible to detect the horizontal movement direction and movement speed of the user's finger. Accordingly, the user can make the character to be inputted displayed by only sliding the finger on the input key 29, and only pressing the input key 29 once allows one inputted character to be determined. Thus, the load put on the user's hand and finger used for operation is lightened, which allows the comfortable operation with the lightened mental and physical load.

### (Third Embodiment)

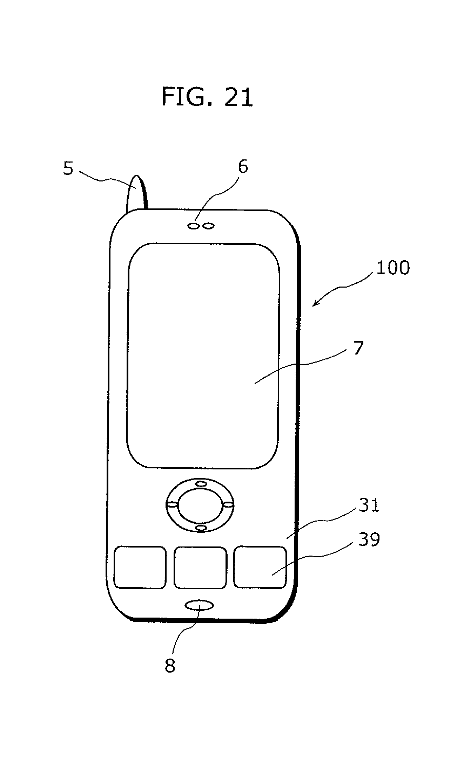

A third embodiment is described using FIGS. 21 to 25. It should be noted that the same elements as in the first embodiment or the second embodiment which are given the same numerals are not described.

FIG. 21 is an external view of a mobile terminal having an input device 31 according to the third embodiment of the present invention. The mobile terminal is the same as in the first embodiment, except a configuration of the input device 31.

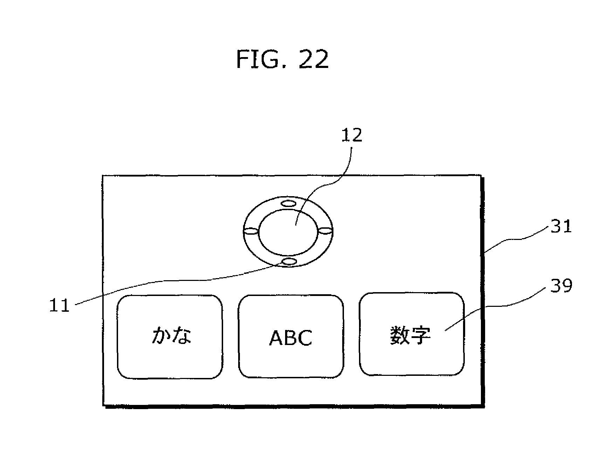

FIG. 22 is a diagram showing the configuration of the input device 31 according to the third embodiment of the present invention. The input device 31 is made up of three input keys 39.

The input keys 39 are made up of: a numeral key (labeled as 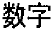 in the figure) to which numerals 0 to 9 are assigned; a character key (labeled as 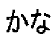 in the figure) to which the 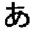 to 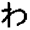 columns of the Japanese syllabary are assigned; and a key to which alphabets A to Z are assigned.

It should be noted that including the character conversion key 11 and the enter key 12 in addition to the input keys 39 and providing the capacitive touch sensor 15 on the input keys 39 are the same as in the first embodiment. The difference from the first embodiment is that a vertical and horizontal movement direction and movement speed of the user's finger on the input key 39 can be detected.

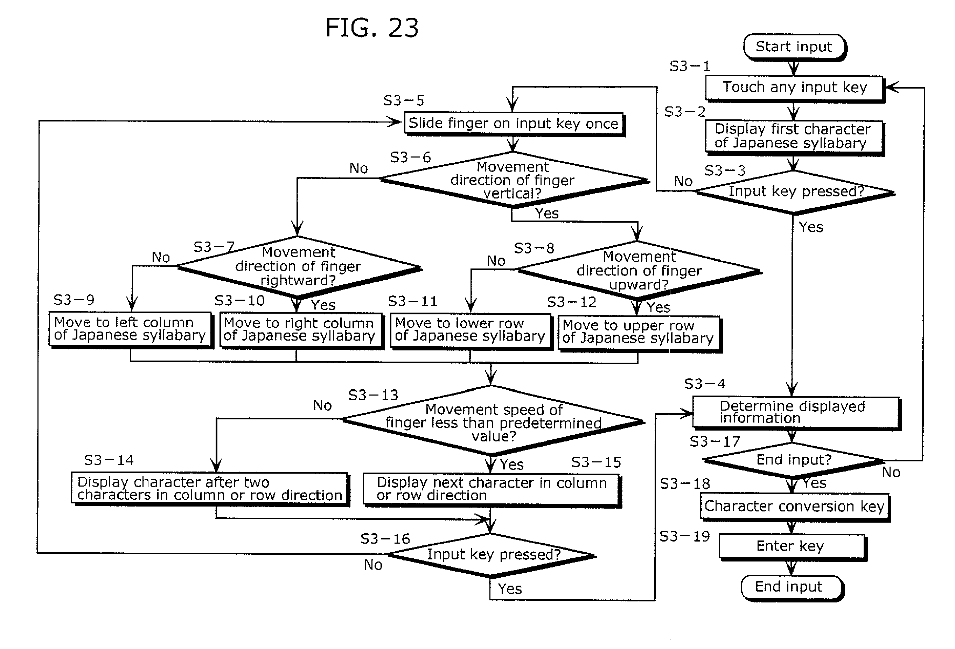

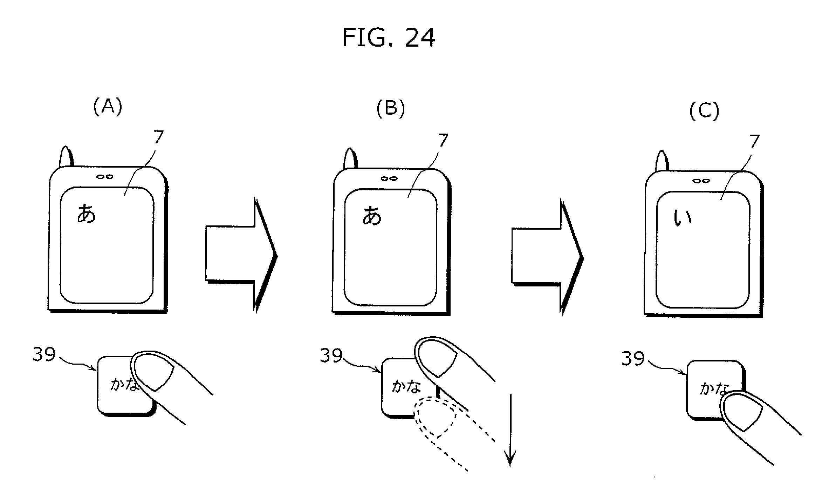

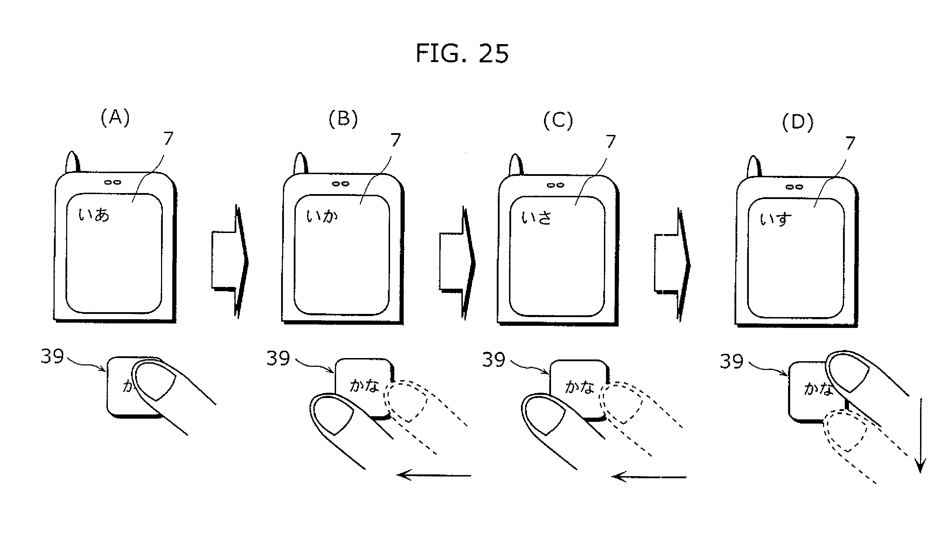

FIG. 23 is a flow chart showing operations of the input device 31 according to the third embodiment of the present invention. FIGS. 24 and 25 are diagrams showing a character input operation by the user using the mobile terminal 100 which has the input device 31 according to the third embodiment of the present invention, and an operation procedure compliant with the flow chart in FIG. 23.

Hereinafter, the operations of the input device 31 according to the third embodiment of the present invention are described using FIGS. 23 to 25. It should be noted that concerning the alphabet input, the *katakana* input, the numeral input or the combination of these inputs, the character conversion key 11 or a key to which alphabets, *katakana* characters, and numerals are assigned may be used only. The operation itself follows the same flow chart.

First, when the user touches the input key 29 to which the 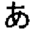 column of the Japanese syllabary is assigned (S2-1 in FIG. 18), the first character of the Japanese syllabary (the character " 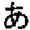 " is assumed in the present embodiment) selected by the selection unit 72 from the association storage unit 71 is stored in the temporary storage unit 73 and at the same time displayed on the display unit 7 (S3-2 in FIG. 23), as shown in FIG. 24(A). At this time, in the case where the user desires to input the character " 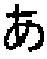 ", when the input key 39 is pressed (S3-3: Yes in FIG. 23), the press detection unit 74 detects the press and the determination unit 75 can determine, as input information, the character " 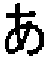 " stored in the temporary storage unit 73 (S3-4 in FIG. 23).

Additionally, when the user slides the finger once (S3-5 in FIG. 23) without pressing the input key 39 (S3-3: No in FIG. 23), the selection unit 72 selects, from the association storage unit 71, a character associated with the movement direction and the movement speed of the finger detected by the movement direction detection unit 77a and the movement speed detection unit 77b, and the selected character is displayed on the display unit 7. For example, as shown in FIG. 24(B), when the finger is slid downward once (S3-6: Yes, S3-8: No in FIG. 23), the characters of the 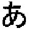 column are displayed in sequence (in sequence of " 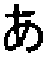 "→" 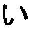 "→" 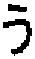 "→" 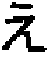 "→" 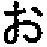 ") (S3-11 in FIG. 23). At this time, in the case where the movement speed of the slid finger is less than a predetermined value (S3-13: Yes in FIG. 23), the selection unit 72 selects the character " 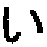 " from the association storage unit 71 and stores it in the temporary storage unit 73, and the character " 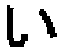 " is displayed on the display unit 7 (S3-15 in FIG. 23), as shown in FIG. 24(C). In this condition, when the user presses the input key 39 (S3-16: Yes in FIG. 23), the press detection unit 74 detects the press and the determination unit 75 can determine, as the input information, the character " 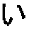 " stored in the temporary storage unit 73 (S3-4 in FIG. 23).

In the case further continuing the input operation (S3-17: No in FIG. 23), when the input key 39 is touched, the 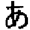 column's first character " 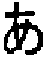 " selected by the selection unit 72 from the association storage unit 71 is stored in the temporary storage unit 73 and at the same time displayed on the display unit 7 (S3-2 in FIG. 23), as shown in FIG. 25(A). In this condition, sliding the finger leftward with reference to the mobile terminal 100 on the input key 39 once (S3-6: No, S3-7: No in FIG. 23) results in characters of the 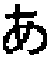 row being displayed in sequence (in sequence of " 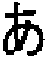 "→" 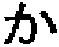 "→" 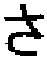 "→" 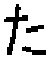 "→ " 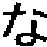 ") (S3-9 in FIG. 23).

At this time, in the case where the movement speed of the slid finger is less than the predetermined value (S3-13: Yes in FIG. 23), the selection unit 72 selects the Japanese character " 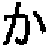 " from the association storage unit 71 and stores it in the temporary storage unit 73, and the character " 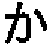 " is displayed on the display unit 7 (S3-15 in FIG. 23), as shown in FIG. 25(B). Here, when the finger is slid leftward in the same manner again at below the predetermined speed without pressing the input key 39 (S3-16: No in FIG. 23), the Japanese character " 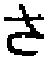 " is displayed on the display unit 7 (S3-15 in FIG. 23), as shown in FIG. 25(C).

In this condition, when the user slides the finger downward at below the predetermined speed (S3-5, S3-6: Yes, S3-8: No, S3-11, S3-13: No in FIG. 23), the Japanese character " 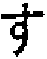 " is displayed on the display unit 7 (S3-14 in FIG. 23).

In this condition, when the user presses the input key 39 (S3-16: Yes in FIG. 23), the press detection unit 74 detects the press and the determination unit 75 can determine, as the input information, the character " 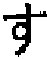 " stored in the temporary storage unit 73 (S3-4 in FIG. 23). Here, in the case ending the character input (S3-17: Yes in FIG. 23), the character conversion key 11 is pressed (S3-18 in FIG. 18), and then the enter key 12 is pressed (S3-19 in FIG. 23). Accordingly, inputting the characters " 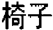 " is completed.

As described above, according to the input device 31 in the third embodiment of the present invention, it is possible to detect the vertical and horizontal movement direction and movement speed of the user's finger. Accordingly, the user can make the character to be inputted displayed by only sliding the finger on the input key 39, and only pressing the input key 39 once allows one inputted character to be determined. Thus, the load put on the user's hand and finger used for operation is lightened, which allows the comfortable operation with the lightened mental and physical load.

It should be noted that although the capacitive touch sensor is adopted here, the present invention is not limited to this. For example, an electromagnetic-induction-type, a resistive-sheet-type or an infrared-type touch sensor, optical sensor, pressure sensor or the like that can determine which section is touched by the user may suffice.

Furthermore, the display unit according to the present invention not only provides information to the user merely visually, but also may include a means to provide the information with audio and light.

Moreover, a way to assign the information to the input key according to the present invention is not necessarily limited to what is described in the above-mentioned embodiments, and other ways to assign are certainly acceptable.

In addition, although the configuration in which the present invention is applied to the mobile terminal is illustrated, subjects to application are not limited to this. That is to say, the present invention can be applied to a mobile device which is held in one hand and on which the input operation is performed with the other hand, such as a remote controller and a game console.

Furthermore, although the character 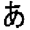 is displayed when the user first touches the input key to which the 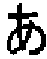 column is assigned, the present invention is not limited to this. For example, when the user who frequently inputs the character " 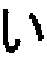 " touches the input key to which the 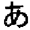 column is assigned, the character " 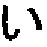 " may be initially displayed. This function can be realized by taking an input history of the user.

In other words, when the input is determined using the input key, the determined information is stored in association with the input key in the determined information memory unit 76. Then, in the case where the user touches the input key, the selection unit 72 initially selects the information which is stored in association with the input key in the determined information memory unit 76. This way, in the case where the user desires to input the same information as the inputted information that is determined in the past, only pressing the input key allows the information to be determined. Consequently, since it is not necessary to slide the finger on the input key, it is possible to lighten the operation load put on the user.

Moreover, although, in the first embodiment, only the operation in the case sliding the finger vertically is described and a case where the finger is horizontally slid is not mentioned, what processing is to be performed in the case of sliding the finger horizontally as stated above is not particularly limited. That is to say, it is possible to perform no special processing or some special processing. The same is true on the case where the finger is horizontally slid on the input key in the second embodiment.

In addition, although the input key according to the present invention is preferably configured with hardware, it may be configured with software, for example, such as a touch panel. In other words, the input key described in the present embodiment may be configured such that soft keys which allow a touch input are assigned to a single physical key. Additionally, the information is selected by touching the soft key, and then the selected information is determined by pressing the physical key. Thus, in the case where the input key is configured only with the soft keys, it is necessary to separately adopt a mechanism (mechanism for determining the selected information as the input information) equivalent to pressing the physical key. Although the mechanism is not particularly limited, for example, when a predetermined time (e.g. 2 seconds) passes since the information is selected, the selected information may be determined as the input information.

Moreover, although the input information is determined by pressing the input key in the present embodiment, an operation of determining the input (hereinafter, referred to as "determination operation") is not limited to this. For example, when another input key is touched while operating an input key, an operation of touching the another key may be regarded as the determination operation. For example, in a condition where the character " 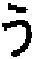 " is displayed by operating an input key to which the 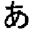 column is assigned, when an input key to which the 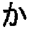 column is assigned is operated, the character " 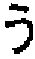 " is determined as the input information. Since such determination operation is adopted in a generic input device, it is not described in detail here.

Here, in the case continuously inputting characters included in the same column, for example, in the case inputting the characters " 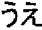 ", it is necessary to operation only the input key to which the 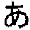 column is assigned. The configuration in which the character " 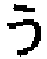 " is determined as the input information by pressing the input key to which the 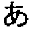 column is assigned is described in the present embodiment. As mentioned, when the character " 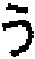 " is determined as the input information, a cursor moves and it becomes possible to input the character " 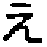 ".

Hereinafter, some other determination operation examples adopted in the present invention are described by exemplifying a situation of inputting the characters " 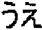 ". It should be noted that a configuration in which the input information is selected by sliding the finger vertically on the input key is adopted in the situation described below.

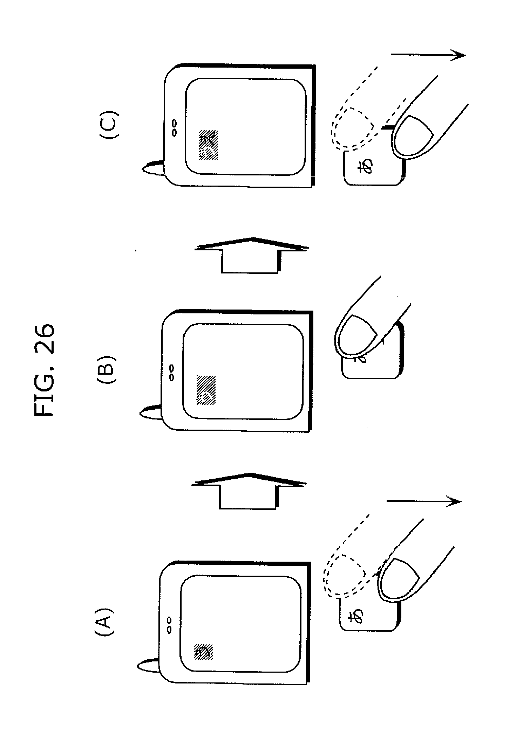

FIG. 26 is a diagram showing another determination operation procedure adopted in the present invention.

First, as shown in FIG. 26(A), the character " 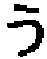 " is displayed by sliding the finger downward on the input key. Here, in the case where determining the character " 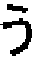 " as the input information is desired, the input key is tapped as shown in FIG. 26(B). To tap is an operation of tapping the input key. Thus, when the character " 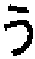 " is determined as the input information, the character " 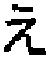 " is displayed by sliding the finger downward on the input key as shown in FIG. 26(C). As mentioned, similar to the case of pressing the input key, tapping the input key allows the input information to be determined.

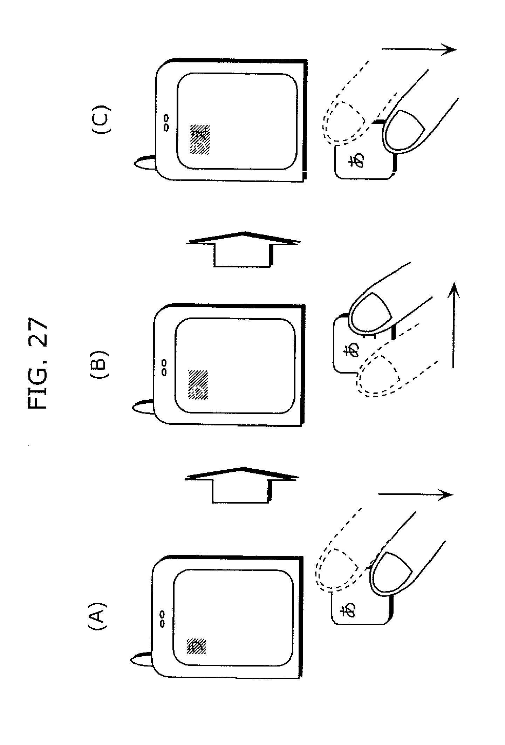

FIG. 27 is a diagram showing another determination operation procedure adopted in the present invention.

First, as shown in FIG. 27(A), the character " 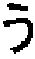 " is displayed by sliding the finger downward on the input key. Here, in the case where determining the character " 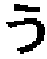 " as the input information is desired, the finger is slid rightward as shown in FIG. 27(B). Thus, when the character " 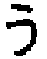 " is determined as the input information, the character " 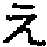 " is displayed by sliding the finger downward on the input key as shown in FIG. 27(C). As mentioned, similar to the case of pressing the input key, sliding the finger horizontally on the input key allows the input information to be determined. Conversely, in the case where the configuration in which sliding the finger horizontally on the input key allows the input information to be selected is adopted, sliding the finger vertically allows the selected input information to be determined.

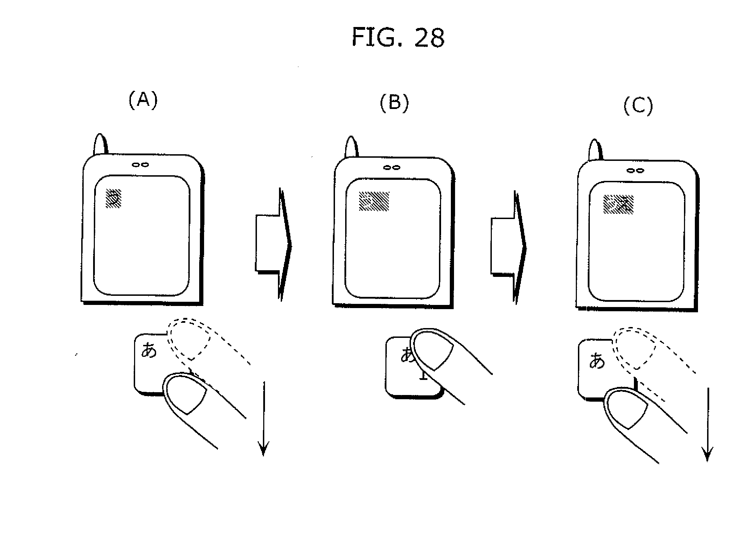

FIG. 28 is a diagram showing another determination operation procedure adopted in the present invention.

First, as shown in FIG. 28(A), the character " 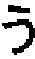 " is displayed by sliding the finger downward on the input key. Here, in the case where determining the character " 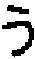 " as the input information is desired, the finger is rested on the input key for a certain period of time as shown in FIG. 28(B). Thus, when the character " 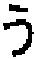 " is determined as the input information, the character " 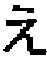 " is displayed by sliding the finger downward on the input key as shown in FIG. 28(C). As mentioned, similar to the case of pressing the input key, tapping the input key allows the input information to be determined.

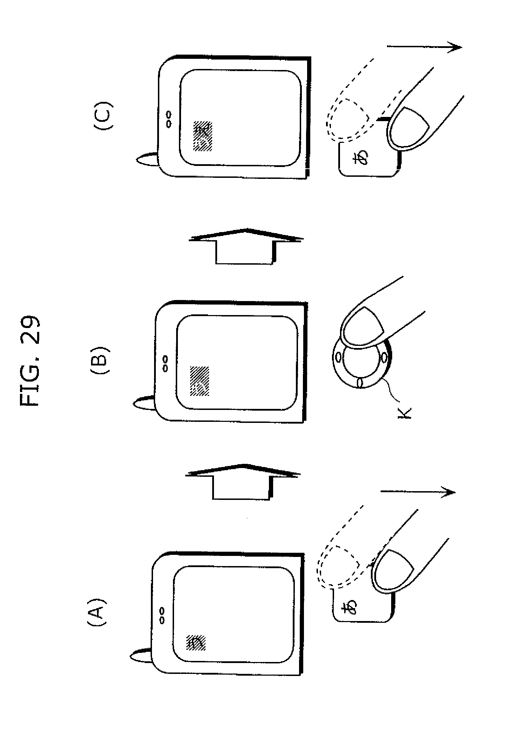

FIG. 29 is a diagram showing another determination operation procedure adopted in the present invention.

First, as shown in FIG. 29(A), the character " 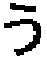 " is displayed by sliding the finger downward on the input key. Here, in the case where determining the character " 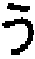 " as the input information is desired, a cursor key K with which a cursor is moved is pressed as shown in FIG. 29(B). That is to say, when the cursor key K with which the cursor is moved rightward is pressed, the cursor moves rightward and at the same time the character " 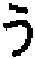 " is determined as the input information. Consequently, as shown in FIG. 29(C), the character " 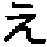 " is displayed by sliding the finger downward on the input key. As mentioned, similar to the case of pressing the input key, even pressing a key (here the cursor key K) other than the input key allows the input information to be determined.

It should be noted that although the input information is selected in the case where the finger is slid in a certain direction, such as a vertical or a horizontal direction, in the present embodiment, the present invention is not limited to this. In other words, regardless of the direction the finger is slid in, a different character may be selected from a character array by simply moving the finger on the input key. Stated differently, as shown in FIG. 6(B), when the movement detection unit 77d which detects a movement of the finger on the input key is included and the movement of the finger on the input key is detected by the movement detection unit 77d, it becomes possible to retrieve desired information from an array of the character-related information or the function information. As a result, the problem of incorrect input caused by the subtle difference in the movement direction is solved, and the user's mental and physical load can be lightened.

Furthermore, in the case where a movement of the finger changes, one at a time, an order with reference to information included in an array (e.g. the 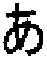 column of the Japanese syllabary), since it is possible to predict the information whose order is changed according to the number of times for sliding the finger on the input key, it is also possible to touch type. Thus, since the user does not need to check the arranged position of the characters and the like, the comfortable operation with the lightened mental and physical load is made possible.

Moreover, although the movement direction detection unit 77a is assumed to detect the certain direction, such as the vertical or the horizontal direction, the direction here may be a certain range of a direction. For example, in the case where the finger is moved in an upper right direction at 30 degree on the input key, the movement direction detection unit 77a may detect either an upward or a rightward movement. As mentioned, even with the configuration in which the certain range of the direction is detected, the problem of incorrect input caused by the subtle difference in the movement direction can be solved, and the user's mental and physical load can be lightened.

In addition, although inputting the Japanese is mainly described in the first to third embodiments, information to be inputted may be other languages. That is to say, when the information in the association table T of FIG. 7 is replaced with other language information, inputting, for example, Chinese, English, German, French or the like, can be realized with the same operation.

Further, the information associated in the above-mentioned association table T is not limited only to the character-related information or the function information. Other information may be associated. For example, when music information, TV program information, or the like is associated in the association table T, the user can select a music or a TV program by sliding the finger on the input key and determine the selection of the desired music or TV program by pressing the input key.

### INDUSTRIAL APPLICABILITY

The input device according to the present invention allows the comfortable operation with the lightened mental and physical load and can be applied to the use for mobile phones, remote controllers, game consoles, or the like.

## Claims

1. An input device having at least one input key, comprising:
an association storage unit operable to store an array of plural information in association with said input key, the plural information each having an order;
a selection unit operable to select, from the array, predetermined information as input information;
a touch detection unit operable to detect that an object touches a surface of said input key; and
a movement relevant information detection unit operable to detect movement relevant information concerning a movement of a contact point between the surface of said input key and the object, the contact point being detected by said touch detection unit,
wherein said selection unit is operable to select, from the array, information having a predetermined order stored in association with said input key on which said touch detection unit detects the touch by the object, based on the movement relevant information.

2. The input device according to Claim 1,
wherein said input key is a push-type input key, and
said input device further comprises:
a press detection unit operable to detect that said input key is pressed; and
a determination unit operable to determine, as the input information, the predetermined information selected by said selection unit, when said press detection unit detects the press.

3. The input device according to Claim 1,
wherein said movement relevant information detection unit is a movement detection unit which is operable to detect that the object touching the surface of said input key moves on the surface of said input key, and
said selection unit is operable to select other information which is present in the array where the predetermined information is present and which is different from the predetermined information selected by said selection unit, in the case where said movement detection unit detects the movement.

4. The input device according to Claim 1,
wherein said movement relevant information detection unit is a movement direction detection unit which is operable to detect a movement direction of the object that moves on the surface of said input key, the object touching the surface of said input key, and
said selection unit is operable to select information having an order subsequent to an order of the predetermined information selected by said selection unit, in the case where the movement direction detected by said movement direction detection unit is a first movement direction, or to select information having an order antecedent to an order of the predetermined information, in the case where the movement direction detected by said movement direction detection unit is a second direction.

5. The input device according to Claim 1,
wherein said movement relevant information detection unit is a movement speed detection unit operable to detect a movement speed of the object that moves on the surface of said input key, the object touching the surface of said input key, and
said selection unit is operable to select other information which is present in the array where the predetermined information selected by said selection unit is present, the selection being made based on the movement speed detected by said movement speed detection unit, and the other information having an order changed from an order of the predetermined information being a base point for the chance.

6. The input device according to Claim 1,
wherein said movement relevant information detection unit is a movement amount detection unit operable to detect a movement amount of the object that moves on the surface of said input key, the object touching the surface of said input key, and
said selection unit is operable to select other information which is present in the array where the predetermined information selected by said selection unit is present, the selection being made based on the movement amount detected by said movement amount detection unit, and the other information having an order changed from an order of the predetermined information being a base point for the change.

7. The input device according to Claim 4,
wherein the first movement direction is either upward or rightward, and
the second movement direction is either downward or leftward.

8. The input device according to Claim 1,
wherein said selection unit selects:
i) the predetermined information by returning from a last order to a first order in the array, in the case of selecting information subsequent to the last order in the array; and
ii) the predetermined information by returning to the last order in the array, in the case of selecting information antecedent to the information having the first order in the array.

9. The input device according to Claim 1,
wherein the information is character-related information indicating at least one of a character, a numeral, and a symbol.

10. The input device according to Claim 1,
wherein an array of the character-related information is equivalent to one column of the Japanese syllabary.

11. The input device according to Claim 1,
wherein an array of the character-related information is equivalent to the Japanese syllabary.

12. A mobile terminal comprising the input device according to one of Claim 1 to Claim 11.

13. An input method for an input device having at least one input key, said method comprising the steps of:
detecting whether or not an object touches a surface of said input key;
detecting a movement direction of the object which moves on the surface of said input key, the object touching the surface of said input key; and
selecting, as input information, information having an order subsequent to an order of information selected as input information in an array when it is detected that the object touching the surface of said input key moves on the surface of said input key in a certain direction.

14. A program for an input device having at least one input key, said program causing a computer to execute the steps of:
detecting whether or not an object touches a surface of said input key;
detecting a movement direction of the object which moves on the surface of said input key, the object touching the surface of said input key; and
selecting, as input information, information having an order subsequent to an order of information selected as input information in an array when it is detected that the object touching the surface of said input key moves on the surface of said input key in a certain direction.
